(19) Europäisches Patentamt
European Patent Office
Office européen des brevets

(11) EP 3 848 504 B1

(12) EUROPEAN PATENT SPECIFICATION

(45) Date of publication and mention of the grant of the patent:
**08.11.2023 Bulletin 2023/45**

(21) Application number: **19857424.6**

(22) Date of filing: **05.09.2019**

(51) International Patent Classification (IPC):
***D21H 11/20*** *(2006.01)* ***C08B 5/00*** *(2006.01)*
***C08B 15/00*** *(2006.01)* ***C08L 1/08*** *(2006.01)*
***C08L 101/00*** *(2006.01)*

(52) Cooperative Patent Classification (CPC):
**D21C 9/002; C08B 5/00; C08B 15/00; C08L 1/08; D21C 9/005; D21H 11/20**

(86) International application number:
**PCT/JP2019/034906**

(87) International publication number:
**WO 2020/050348 (12.03.2020 Gazette 2020/11)**

(54) **CELLULOSE FIBER-CONTAINING MATERIAL, FLUFFED CELLULOSE, AND COMPOSITION**

FASERIGES CELLULOSEHALTIGES MATERIAL, FLOCKIGE ZELLULOSE UND ZUSAMMENSETZUNG

MATÉRIAU FIBREUX CONTENANT DE LA CELLULOSE, CELLULOSE PELUCHÉE ET COMPOSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2018 JP 2018166886**

(43) Date of publication of application:
**14.07.2021 Bulletin 2021/28**

(73) Proprietor: **Oji Holdings Corporation**
**Chuo-ku**
**Tokyo 104-0061 (JP)**

(72) Inventors:
- **NOGUCHI, Yuichi**
  **Tokyo 104-0061 (JP)**
- **ZHAO, Mengchen**
  **Tokyo 104-0061 (JP)**
- **TODOROKI, Yusuke**
  **Tokyo 104-0061 (JP)**

(74) Representative: **Godemeyer Blum Lenze Patentanwälte**
**Partnerschaft mbB - werkpatent**
**An den Gärten 7**
**51491 Overath (DE)**

(56) References cited:
**JP-A- H0 810 284**
**JP-A- 2010 077 248**
**JP-A- 2011 047 084**
**JP-A- 2017 065 109**
**JP-A- 2017 065 109**
**US-A1- 2006 184 147**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 848 504 B1

## Description

### Technical Field

The present invention relates to a cellulose fiber-containing material, a fluffed cellulose, and a composition.

### Background Art

In recent years, because of enhanced awareness of alternatives to petroleum resources and environmental consciousness, there has been a focus on materials utilizing reproducible natural fibers. In particular, wood-derived cellulose fibers (pulp) have been widely used mainly as absorbent articles or paper products so far.

A pulp that is composed of wood-derived cellulose fibers generally has hydrophilicity. Thus, such a pulp is preferably used as a component required to exhibit water absorbency or liquid permeability, for example, in absorbent articles. Patent Document 1 discloses an absorbent article comprising a liquid permeable surface sheet, a liquid impermeable back sheet, an absorbent, and a non-woven sheet for the absorbent, and it is described that the non-woven sheet for the absorbent comprises a pulp and hydrophilic fibers. Moreover, Patent Document 1 also discloses an aspect in which the absorbent comprises a fluffed pulp having higher ability to absorb body fluid or the like.

A wide variety of paper products comprising a pulp have been known. For example, a paper product for inkjet recording medium has been known. Such a paper product for inkjet recording medium is required to have an ink-absorbing property, as well as ink non-diffusivity in a lateral direction. Thus, the paper product for inkjet recording medium is required to have high properties in some cases. For example, Patent Document 2 discloses a recorded medium consisting of a porous cellulose layer comprising at least one type of cellulose selected from the group consisting of a lightly beaten cellulose pulp, a mercerized cellulose and a fluffed cellulose, and being filled with a porous filler.
Patent Document 3 (JP 2017-065109 A) discloses a fine fiber-containing sheet and a laminate, wherein the sheet contains a fine fiber having an ionic substituent and an organic onium ion which is a counter ion of the ionic substituent, wherein the fine fiber has a fiber width of 1000 nm or less.

### Prior Art Documents

#### Patent Documents

Patent Document 1: Japanese Patent Publication No. 2015-213643 A
Patent Document 2: Japanese Patent Publication No. 2007-46219 A
Patent Document 3: Japanese Patent Publication No. 2017-065109 A

### Summary of Invention

#### Object to be Solved by the Invention

As mentioned above, a fluffed cellulose (also referred to as a "fluffed pulp") may be used in absorbent articles or paper products in some cases. Such a fluffed cellulose is composed of fluffed cellulose fibers, which are fluffy or vellus hair-state cellulose fibers. The fluffed cellulose is able to promptly absorb and diffuse a liquid according to a capillary phenomenon. Conventionally, since the fluffed cellulose has been mainly used for the purpose of promoting absorption of an aqueous liquid, modification of the surface properties of the fluffed cellulose has not been studied under the current circumstances.

Hence, the present inventors have conducted studies for the purpose of modifying the surface of a fluffed cellulose, and providing a fluffed cellulose having totally new properties that have not conventionally existed, and a cellulose fiber-containing material capable of realizing the same.

#### Means for Solving the Object

As a result of intensive studies directed towards achieving the aforementioned object, the present inventors have found that anionic groups are introduced into cellulose fibers, and further, organic onium ions having a predetermined structure are also introduced therein as counterions of the anionic groups, so that a fluffed cellulose having favorable fluffiness and hydrophobicity and a cellulose fiber-containing material capable of realizing the same can be obtained.

Specifically, the present invention has the following configuration.

[1] A cellulose fiber-containing material comprising cellulose fibers having anionic groups, wherein

the fiber width of the cellulose fibers is greater than 1000 nm,
wherein the anionic group is at least one selected from a phosphoric acid group or a phosphoric acid group-derived substituent, a carboxy group or a carboxy group-derived substituent, and a sulfone group or a sulfone group-derived substituent,
the amount of the anionic group is from 0.10 mmol/g to 5.2 mmol/g of the cellulose fibers,
the yield of the cellulose fiber-containing material measured by the following measurement method is 50% by mass or more,
the cellulose fiber-containing material has organic onium ions as counterions of the anionic groups,
the organic onium ion is represented by the following formula (A):

[Formula 2]

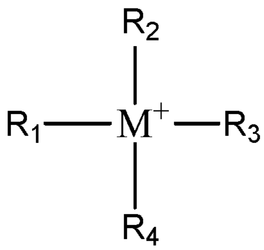

Formula (A)

wherein in the formula (A), M represents a nitrogen atom or a phosphorus atom, and $R_1$ to $R_4$ each independently represent a hydrogen atom or an organic group,
wherein at least one of $R_1$ to $R_4$ represents an organic group containing 5 or more carbon atoms, or that the total number of carbon atoms contained in $R_1$ to $R_4$ is 17 or more;
the content of the organic onium ions is 1.0% by mass or more with respect to the total mass of the cellulose fiber-containing material, and
the organic onium ions satisfy at least one condition selected from the following (a) and (b):

(a) containing a hydrocarbon group having 5 or more carbon atoms; and
(b) having a total carbon number of 17 or more,

(measurement method)
a cellulose fiber-containing material is immersed in ion exchange water for 24 hours, a solid concentration is adjusted to 20% by mass, and a dispersion treatment is carried out for 15 minutes using a high-speed rotating disperser at a circumferential speed of 10 m/s; and the obtained dispersed solution is subjected to wet classification on a JIS test sieve with an opening of 150 μm, and the yield is calculated according to the following equation:

yield [% by mass] = absolute dry mass of cellulose fiber-containing material remaining on test sieve / absolute dry mass of cellulose fiber-containing material subjected to test x 100.

[2] The cellulose fiber-containing material according to [1], wherein in the formula (A) M represents a nitrogen atom.
[3] The cellulose fiber-containing material according to [1] or [2], wherein the organic onium ion is selected from the group consisting of lauryltrimethyl ammonium, cetyltrimethyl ammonium, stearyltrimethyl ammonium, octyldimethylethyl ammonium, lauryldimethylethyl ammonium, didecyldimethyl ammonium, lauryldimethylbenzyl ammonium, tributylbenzyl ammonium, methyltri-n-ocyl ammonium, hexyl ammonium, n-octyl ammonium, dodecyl ammonium, tetradecyl ammonium, hexadecyl ammonium, stearyl ammonium, N,N-dimethyldodecyl ammonium, N,N-dimethyltetradecyl ammonium, N,N-dimethylhexadecyl ammonium, N,N-dimethyl-n-octadecyl ammonium, dihexyl ammonium, di(2-ethylhexyl) ammonium, di-n-octyl ammonium, didecyl ammonium, didodecyl ammonium, didecylmethyl ammonium, N,N-didodecylmethyl ammonium, polyoxyethylene dodecyl ammonium, alkyldimethylbenzyl ammonium, di-n-alkyldimethyl ammonium, behenyltrimethyl ammonium.

[4] The cellulose fiber-containing material according to [1], wherein the organic onium ion is selected from the group consisting of tetraphenyl phosphonium, tetraoctyl phosphonium, acetonyltriphenyl phosphonium, allyltriphenyl phosphonium, amyltriphenyl phosphonium, benzyltriphenyl phosphonium, ethyltriphenyl phosphonium, diphenylpropyl phosphonium, triphenyl phosphonium, tricyclohexyl phosphonium, and tri-n-octyl phosphonium.

[5] A fluffed cellulose formed by fluffing the cellulose fiber-containing material according to any one of [1] to [4].

[6] A composition comprising the cellulose fiber-containing material according to any one of claims 1 to 4 or the fluffed cellulose according to [5], and an organic solvent.

[7] A composition comprising the cellulose fiber-containing material according to any one of [1] to [4]. or the fluffed cellulose according to [5], and a resin.

Advantageous Effects of Invention

By using the cellulose fiber-containing material of the present invention, a fluffed cellulose having new properties can be provided. Specifically, a fluffed cellulose having favorable fluffiness and hydrophobicity and a cellulose fiber-containing material capable of realizing the same can be provided.

Brief Description of Drawings

Figure 1 is a graph showing the relationship between the amount of NaOH added dropwise to cellulose fibers having phosphoric acid groups and electrical conductivity.

Figure 2 is a graph showing the relationship between the amount of NaOH added dropwise to cellulose fibers having carboxy groups and electrical conductivity.

Embodiments of Carrying out the Invention

Hereinafter, the present invention will be described in detail. The description for components described below will be based on representative embodiments or specific examples; however, the present invention will not be limited to such embodiments.

(Cellulose fiber-containing material)

The present invention relates to a cellulose fiber-containing material comprising cellulose fibers having anionic groups. The cellulose fiber-containing material has organic onium ions as counterions of the anionic groups, and the organic onium ions satisfy at least one condition selected from the following (a) and (b):

(a) containing a hydrocarbon group having 5 or more carbon atoms; and
(b) having a total carbon number of 17 or more.

In addition, the yield of the cellulose fiber-containing material measured by the following measurement method is 50% by mass or more.

(Measurement method)

A cellulose fiber-containing material is immersed in ion exchange water for 24 hours, a solid concentration is adjusted to 20% by mass, and a dispersion treatment is carried out for 15 minutes using a high-speed rotating disperser at a circumferential speed of 10 m/s. The obtained dispersed solution is subjected to wet classification on a JIS test sieve with an opening of 150 μm, and the yield is calculated according to the following equation:

yield [% by mass] = absolute dry mass of cellulose fiber-containing material remaining on test sieve / absolute dry mass of cellulose fiber-containing material subjected to test x 100.

In the present invention, the yield of the cellulose fiber-containing material measured by the above measurement

method may be 50% by mass or more, and it is preferably 70% by mass or more, more preferably 80% by mass or more, and further preferably 90% by mass or mor. Besides, the upper limit of the yield of the cellulose fiber-containing material is not particularly limited, and it may also be 100% by mass.

Upon the measurement of the yield of the cellulose fiber-containing material, first, the cellulose fiber-containing material is immersed in ion exchange water for 24 hours, a solid concentration is then adjusted to 20% by mass, and a dispersion treatment is then carried out for 15 minutes using a high-speed rotating disperser at a circumferential speed of 10 m/s. As such a high-speed rotating disperser, for example, T. K. Robomix manufactured by PRIMIX Corporation (using an impeller with a radius of 15 mm) can be used. Subsequently, the obtained dispersed solution is subjected to wet classification on a JIS test sieve with an opening of 150 μm. During this wet classification, ion exchange water may be showered from the upper portion of the test sieve at a flow rate of 150 mL/sec onto the test sieve, so that the cellulose fibers may be sufficiently spread onto the test sieve.

Since the cellulose fiber-containing material of the present invention has the above-described configuration, it becomes a fluffed cellulose having favorable fluffiness. Herein, the fluffiness can be evaluated based on a fluffed cellulose recovery rate or the bulk of a fluffed cellulose, when the cellulose fiber-containing material is converted to the fluffed cellulose. When the fluffed cellulose recovery rate is high and the bulk of a fluffed cellulose is high upon the fluffing of the cellulose fiber-containing material, it is said in the present description that the fluffiness is favorable.

The fluffed cellulose recovery rate is a value calculated according to the following method. First, the cellulose fiber-containing material is diluted with ion exchange water to a concentration of 1% by mass, and the basis weight relative to absolute dry mass is adjusted to 200 g/m$^2$. The resultant is filtrated under reduced pressure again so that it is converted to a sheet, which is then dried under conditions of 30°C and a relative humidity of 40% so that it has a constant amount, thereby obtaining a cellulose fiber-containing sheet. A section (1 g (0.005 m$^2$) at an absolute dry mass) is cut out of the obtained cellulose fiber-containing sheet, and it is then treated using a crusher with a volume of 75 mL (Lab Mill Surplus) at 20,000 rpm for 20 seconds for fluffing. After completion of the fluffing treatment, the cellulose fibers (fluffed cellulose) were spread onto a test sieve with an opening of 2 mmφ, and were then gently stirred. The mass of the cellulose fiber-containing material passing through a mesh is measured, and the fluffed cellulose recovery rate is then calculated according to the following equation:

fluffed cellulose recovery rate [% by mass] = absolute dry mass of cellulose fiber-containing material passing through test sieve / absolute dry mass of cellulose fiber-containing material subjected to test x 100.

The fluffed cellulose recovery rate calculated by the above-described method is preferably 30% by mass or more, more preferably 50% by mass or more, and further preferably 60% by mass or more. Besides, the fluffed cellulose recovery rate may also be 100% by mass.

The bulk of a fluffed cellulose is measured by the following method. First, the cellulose fiber-containing material is diluted with ion exchange water to a concentration of 1% by mass, and the basis weight relative to absolute dry mass is adjusted to 200 g/m$^2$. The resultant is filtrated under reduced pressure again so that it is converted to a sheet, which is then dried under conditions of 30°C and a relative humidity of 40% so that it has a constant amount, thereby obtaining a cellulose fiber-containing sheet. A section (1 g (0.005 m$^2$), absolute dry mass) is cut out of the obtained cellulose fiber-containing sheet, and it is then treated using a crusher with a volume of 75 mL (Lab Mill Surplus) at 20,000 rpm for 20 seconds for fluffing. After completion of the fluffing treatment, the cellulose fibers (fluffed cellulose) were spread onto a test sieve with an opening of 2 mmφ, and were then gently stirred. Cellulose fibers passing through a mesh are dropped into a measuring cylinder that is disposed immediately below the test sieve, and after the cellulose fibers have been accumulated in a predetermined volume, the absolute dry mass of the cellulose fibers having a predetermined volume is measured, so as to calculate the bulk (mL/g).

The bulk of the fluffed cellulose measured by the above-described method is preferably 5 mL/g or more, more preferably 10 mL/g or more, and further preferably 20 mL/g or more. Besides, the upper limit value of the bulk of the fluffed cellulose is not particularly limited, and it is preferably 100 mL/g or less.

Moreover, since the cellulose fiber-containing material of the present invention has the above-described configuration, it is converted to a fluffed cellulose having hydrophobicity. Herein, the hydrophobicity of the fluffed cellulose can be evaluated based on the degree of precipitation when water is poured onto the fluffed cellulose. Specifically, the hydrophobicity can be evaluated based on the precipitation percentage from the water surface after water is poured onto the fluffed cellulose by the following method. First, the cellulose fiber-containing material is diluted with ion exchange water to a concentration of 1% by mass, and the basis weight relative to absolute dry mass is adjusted to 200 g/m$^2$. The resultant is filtrated under reduced pressure again so that it is converted to a sheet, which is then dried under conditions of 30°C and a relative humidity of 40% so that it has a constant amount, thereby obtaining a cellulose fiber-containing

sheet. A section (1 g (0.005 $m^2$), absolute dry mass) is cut out of the obtained cellulose fiber-containing sheet, and it is then treated using a crusher with a volume of 75 mL (Lab Mill Surplus) at 20,000 rpm for 20 seconds for fluffing. After completion of the fluffing treatment, the cellulose fibers (fluffed cellulose) were spread onto a test sieve with an opening of 2 mmcp, and were then gently stirred. Cellulose fibers passing through a mesh are dropped into a vessel having a diameter of 40 mmφ disposed at a position 50 mm immediately below the test sieve. Thereafter, ion exchange water is dropped along the wall surface of the vessel at a rate of 20 g/min, so that 50 g of the ion exchange water is gently poured into the vessel. Immediately after the pouring, cellulose fibers coming up to the surface of the water as a result of water repellency and cellulose fibers precipitated to the bottom portion are recovered, separately, and thereafter, the precipitation percentage from the water surface is calculated. The smaller this value, the stronger the hydrophobicity of the cellulose fibers that can be obtained.

Precipitation percentage [% by mass] from water surface = absolute dry mass of precipitated cellulose fiber-containing material / (absolute dry mass of precipitated cellulose fiber-containing material + absolute dry mass of cellulose fiber-containing material coming up to water surface) x 100.

The precipitation percentage of the fluffed cellulose calculated by the above-described method is preferably 50% by mass or less, more preferably 40% by mass or less, and further preferably 30% by mass or less. The precipitation percentage of the fluffed cellulose is particularly preferably 10% by mass or less.

In the present invention, as mentioned above, the yield obtained when wet classification is carried out on a JIS test sieve having an opening of 150 μm may be 50% by mass or more. The yield obtained when wet classification is carried out on a JIS test sieve having an opening of 300 μm is preferably 30% by mass or more, more preferably 60% by mass or more, and further preferably 80% by mass or more. Besides, the upper limit of the yield obtained when wet classification is carried out on a JIS test sieve having an opening of 300 μm is not particularly limited, and it may also be 100% by mass.

When the yield is calculated when wet classification is carried out on a JIS test sieve having an opening of 300 μm, it can be calculated by the same method as the aforementioned method of measuring the yield when wet classification is carried out on a JIS test sieve having an opening of 150 μm, with the exception that the JIS test sieve having an opening of 300 μm is used, instead of using the JIS test sieve having an opening of 150 μm.

Besides, the yield obtained when wet classification is carried out on a JIS test sieve having an opening of 150 μm, which is within the above-described range, means that the fiber width of the cellulose fibers is a certain value or more, and also means that the cellulose fibers are coarse fibers. On the other hand, the yield obtained when wet classification is carried out on a JIS test sieve having an opening of 300 μm, which is within the above-described range, means that the cellulose fibers are coarser fibers.

The cellulose fiber-containing material of the present invention may consist of cellulose fibers, or may comprise water and the like, as well as the cellulose fibers. The present cellulose fiber-containing material is preferably a solid. Herein, the shape of such a solid is not particularly limited, and it may be, for example, a sheet or a particulate. Besides, the present cellulose fiber-containing material may be a paste or a powder (*soboro*) containing a solvent such as water. Among others, the cellulose fiber-containing material is preferably a particulate. Herein, the particulate is a powdery and/or a particulate substance. The powdery substance means a substance smaller than the particulate substance. In general, the powdery substance means a fine particle having a particle diameter of 1 nm or more and less than 0.1 mm, whereas the particulate substance is a particle having a particle diameter of 0.1 mm or more and 10 mm or less, but are not limited thereto. In the present description, the particular is also referred to as a powder. The particle diameter of the particulate in the present description can be measured and/or calculated by a laser diffraction method. Specifically, the particle diameter is a value measured using a laser diffraction scattering particle diameter distribution analyzer (Microtrac 3300 EXII, Nikkiso Co., Ltd.).

The solid concentration of the cellulose fiber-containing material is preferably 40% by mass or more, more preferably 60% by mass or more, and further preferably 80% by mass or more, with respect to the total mass of the cellulose fiber-containing material. Besides, the solid concentration of the cellulose fiber-containing material may also be 100% by mass.

(Cellulose fibers)

The cellulose fiber-containing material of the present invention comprises cellulose fibers having anionic groups. Herein, the fiber width of the cellulose fibers is larger than 1000 nm. It is to be noted that the cellulose fiber-containing material may comprise ultrafine cellulose fibers having a fiber width of 1000 nm or less. In this case, the ratio of the

weight of cellulose fibers having a fiber width of larger than 1000 nm is preferably greater than the ratio of the weight of cellulose fibers having a fiber width of 1000 nm or less.

Herein, the fact that the ratio of the weight of cellulose fibers having a fiber width of larger than 1000 nm is greater than the ratio of the weight of cellulose fibers having a fiber width of 1000 nm or less can be confirmed by the following method. First, cellulose fibers before fibrillation, in which cellulose fibers having a size of 1000 nm or less are not substantially present, are subjected to a test, and a cellulose fiber suspension having a constant concentration C is observed under an optical microscope. The area S occupied by cellulose fibers having a fiber width of larger than 1000 nm in the predetermined area $S_0$ in the observed visual field is measured. At this time, the following value $R_0$ is calculated:

$$R_0 = S/S_0/C.$$

Subsequently, with respect to the above cellulose fibers before fibrillation, cellulose fibers after fibrillation are subjected to the same measurement as described above, and $R_0$ obtained at this time is defined as R. It is to be noted that C upon the measurement is defined to be the same concentration. Herein, the value of $Q = 1 - R/R_0$ indicates the ratio of the weight of cellulose fibers having a fiber width of 1000 nm or less that are at least present.

Besides, the term "at least" used herein is caused by the fact that the thickness of fibers is not considered for the "area" observed under an optical microscope. That is to say, ideally, if the thickness of fibers could be converted to the area, $R_0$ and R would have larger values (hereinafter these values are indicated with "authentic $R_0$" and "authentic R"). Regarding the area increased when the thickness of fibers is converted to the area, $R_0$ is larger than R. That is, (authentic$R_0/R_0$) > (authentic R/R).

Thereby, 1 - (authentic R/new $R_0$) > 1 - R/ $R_0$ is held, and thus, the value of $Q = 1 - R/R_0$ indicates the ratio of the weight of cellulose fibers having a fiber width of 1000 nm or less that are at least present.

Herein, the fiber width of cellulose fibers can be measured, for example, by using Kajaani Fiber Size Analyzer (FS-200) manufactured by Kajaani Automation or an optical microscope. Otherwise, the fiber width of cellulose fibers can also be measured by using a scanning electron microscope (SEM), a transmission electron microscope (TEM), an atomic force microscope (AFM), etc., depending on the width of the fiber.

Herein, in the case of using an electron microscope, the fiber width of cellulose fibers can be measured by the following method. First, an aqueous suspension of pulp having a concentration of 0.05% by mass or more and 0.1% by mass or less is prepared, and this suspension is casted onto a hydrophilized carbon film-coated grid as a sample for TEM observation. At this time, SEM images of the surface of the suspension casted onto glass may be observed. Subsequently, the sample is observed using electron microscope images taken at a magnification of 1000x, 5000x, 10000x, or 50000x, depending on the widths of the constituting fibers. However, the sample, the observation conditions, and the magnification are adjusted so as to satisfy the following conditions.

(1) A single straight line X is drawn in any given portion in an observation image, and 20 or more fibers intersect with the straight line X.

(2) A straight line Y, which intersects perpendicularly with the aforementioned straight line in the same image as described above, is drawn, and 20 or more fibers intersect with the straight line Y

The widths of the fibers intersecting the straight line X and the straight line Y in the observation image meeting the above-described conditions are visually read. Thus, three or more sets of observation images of surface portions, which are at least not overlapped, are observed, and the widths of the fibers intersecting the straight line X and the straight line Y are read in each image. Hence, at least 120 fiber widths (20 fibers $\times$ 2 $\times$ 3 = 120) are thus read.

The fiber length of cellulose fibers comprised in the cellulose fiber-containing material of the present invention is not particularly limited, and it is preferably 10 $\mu$m or more, more preferably 100 $\mu$m or more, and further preferably 500 $\mu$m or more. On the other hand, the fiber length of the cellulose fibers is preferably 10000 $\mu$m or less, more preferably 5000 $\mu$m or less, and further preferably 3000 $\mu$m or less. By setting the fiber length within the above-described range, a cellulose fiber-containing material having excellent fluffiness is easily obtained. Herein, the fiber length of the cellulose fibers is measured, for example, by using Kajaani Fiber Size Analyzer (FS-200) manufactured by Kajaani Automation or an optical microscope. Otherwise, the fiber length of the cellulose fibers can also be measured by using a scanning electron microscope (SEM), a transmission electron microscope (TEM), an atomic force microscope (AFM), etc., depending on the length of the fibers.

The cellulose fibers preferably have a type I crystal structure. Herein, the fact that the cellulose fibers have a type I crystal structure may be identified by a diffraction profile obtained from a wide angle X-ray diffraction photograph using CuK$\alpha$ ($\lambda$ = 1.5418 Å) monochromatized with graphite. Specifically, it may be identified based on the fact that there are typical peaks at two positions near 2θ = 14° or more and 17° or less, and near 2θ = 22° or more and 23° or less.

The percentage of the type I crystal structure occupied in the cellulose fibers is, for example, preferably 30% or more, more preferably 40% or more, further preferably 50% or more, and particularly preferably 70% or more. Thereby, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The aspect ratio (fiber length/fiber width) of the cellulose fibers is not particularly limited, and for example, it is preferably 50 or more and 5000 or less, and more preferably 10 or more and 1000 or less. By setting the aspect ratio at the above-described lower limit value or more, a sheet comprising cellulose fibers is easily formed. By setting the aspect ratio at the above-described upper limit or less, when the cellulose fibers are treated, for example, as an aqueous dispersed solution, operations such as dilution are preferably easily handled.

The supernatant yield of the cellulose fibers measured by the following measurement method is preferably 50% by mass or less, more preferably 40% by mass or less, and further preferably 20% by mass or less. In addition, the supernatant yield of the cellulose fibers may also be 0% by mass. Herein, upon the measurement of the supernatant yield of the cellulose fibers, first, cellulose fibers are dispersed in ion exchange water to a solid concentration of 0.1% by mass, so as to obtain a dispersed solution. This dispersed solution is centrifuged using a cooled high-speed centrifugal separator (manufactured by KOKUSAN Co. Ltd., H-2000B) under conditions of 12000 G for 10 minutes. Subsequently, the obtained supernatant is recovered, and the solid concentration in the supernatant is then measured. After that, the yield of the cellulose fibers is calculated according to the following equation:

Supernatant yield of cellulose fibers (% by mass) = solid concentration (% by mass) in supernatant / 0.1 x 100.

Besides, the supernatant yield after completion of the centrifugation is used as an indicator of the fibrillation degree of the cellulose fibers. The supernatant yield of the cellulose fibers, which is within the above-described range, means that the fiber width of the cellulose fibers is within the aforementioned preferred range, and that the cellulose fibers are, what is called, coarse fibers.

The cellulose fibers have anionic groups. The anionic group is at least one selected from, for example, a phosphoric acid group or a phosphoric acid group-derived substituent (which is simply referred to as a "phosphoric acid group" at times), a carboxy group or a carboxy group-derived substituent (which is simply referred to as a "carboxy group" at times), and a sulfone group or a sulfone group-derived substituent (which is simply referred to as a "sulfone group" at times). The anionic group is more preferably at least one selected from a phosphoric acid group and a carboxy group; and is particularly preferably a phosphoric acid group. Since a phosphoric acid group has a larger number of anionic groups per molecule thereof, compared with a carboxy group, etc., the phosphoric acid group can have a larger number of organic onium ions as counterions. Thereby, the hydrophobicity of a fluffed cellulose obtained by fluffing the cellulose fiber-containing material can be more effectively enhanced.

The phosphoric acid group or the phosphoric acid group-derived substituent is, for example, a substituent represented by the following formula (1), and it is generalized as a phosphorus oxoacid group or a substituent derived from phosphorus oxoacid.

The phosphoric acid group is, for example, a divalent functional group corresponding to a phosphoric acid from which a hydroxyl group is removed. Specifically, it is a group represented by $-PO_3H_2$. The substituent derived from the phosphoric acid group may include substituents such as salts of phosphoric acid groups and phosphoric acid ester groups. Besides, the substituent derived from the phosphoric acid group may be comprised as a condensed phosphoric acid group (e.g. a pyrophosphoric acid group) in the cellulose fibers. Moreover, the phosphoric acid group may be, for example, a phosphorous acid group (phosphonic acid group), and the substituent derived from the phosphoric acid group may be salts of a phosphorous acid group, a phosphorous acid ester group, and the like.

[Formula 1]

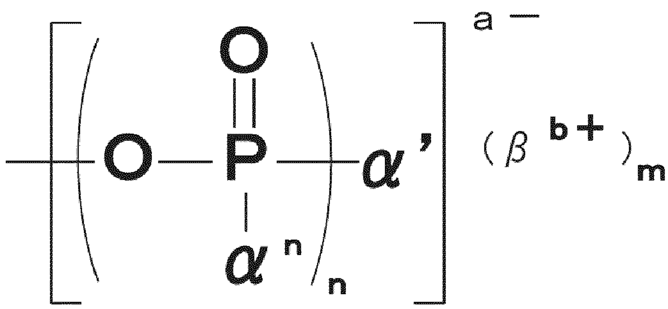

(1)

In the above Formula (1), a, b, and n each represent a natural number (provided that a = b × m); an "a" number of $\alpha^1$, $\alpha^2$, ..., $\alpha^{11}$ and α' is $O^-$, and the rest is either R or OR. All of $\alpha^n$ and α' may also be $O^-$. R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof. Besides, at least a portion of $\beta^{b+}$ is an organic onium ion as described later.

Examples of the saturated straight chain hydrocarbon group may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxy group, a hydroxy group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphoric acid groups can be adjusted in a suitable range, permeation thereof into a fiber raw material can be facilitated, and the yield of the cellulose fibers can also be enhanced.

$\beta^{b+}$ is a mono- or more-valent cation consisting of an organic or inorganic matter. Examples of the mono- or more-valent cation consisting of an organic matter may include an aliphatic ammonium and an aromatic ammonium, and at least a portion of $\beta^{b+}$ is an organic onium ion as described later. Examples of the mono- or more-valent cation consisting of an inorganic matter may include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations consisting of an organic or inorganic matter, sodium or potassium ions, which hardly cause the yellowing of a fiber raw material containing β upon heating and are industrially easily applicable, are preferable, but are not particularly limited thereto.

The amount of anionic groups introduced into the cellulose fibers (the amount of anionic groups) is, per 1 g (mass) of the cellulose fibers, 0.10 mmol/g or more, preferably 0.20 mmol/g or more, further preferably 0.50 mmol/g or more, and particularly preferably 1.00 mmol/g or more. On the other hand, the amount of anionic groups introduced into the cellulose fibers is, for example, per 1 g (mass) of the cellulose fibers, 5.20 mmol/g or less, preferably 3.65 mmol/g or less, and further preferably 3.00 mmol/g or less. Herein, the unit mmol/g indicates the amount of substituents per 1 g (mass) of the cellulose fibers, when the counterions of the anionic groups are hydrogen ions ($H^+$). By setting the amount of anionic groups introduced within the above-described range, the content of organic onium ions that can be comprised in the cellulose fibers can be set within an appropriate range. Thereby, the hydrophobicity of a fluffed cellulose obtained by fluffing the cellulose fiber-containing material can be more effectively enhanced.

The amount of anionic groups introduced into the cellulose fibers can be measured, for example, by a conductometric titration method. In the measurement according to the conductometric titration method, while an alkali such as a sodium hydroxide aqueous solution is added to a slurry containing the ultrafine cellulose fibers, a change in the electrical

conductivity is obtained, so that the amount of anionic groups introduced is measured. Besides, in the present description, when the amount of anionic groups introduced is measured, fibrillation of cellulose fibers is carried out before the measurement according to the conductometric titration method. Fibrillation of cellulose fibers is carried out by treating a dispersed solution of 2% by mass of cellulose fibers, using a high-pressure homogenizer at a pressure of 200 MPa six times.

Figure 1 is a graph showing the relationship between the amount of NaOH added dropwise to the fibrillated cellulose fibers having phosphoric acid groups and electrical conductivity. The amount of the phosphoric acid groups introduced into the cellulose fibers is measured, for example, as follows. First, a slurry containing ultrafine cellulose fibers is treated with a strongly acidic ion exchange resin. Subsequently, while adding a sodium hydroxide aqueous solution, a change in the electrical conductivity is observed, and a titration curve as shown in Figure 1 is obtained. As shown in Figure 1, first, the electrical conductivity is rapidly reduced (hereinafter, this region is referred to as a "first region"). Then, the conductivity starts rising slightly (hereinafter, this region is referred to as a "second region"). Then, the increment of the conductivity is further increased (hereinafter, this region is referred to as a "third region"). The boundary point between the second region and the third region is defined as a point at which a change amount in the two differential values of conductivity, namely, an increase in the conductivity (inclination) becomes maximum. Thus, three regions appear in the titration curve. Among them, the amount of the alkali required for the first region among these regions is equal to the amount of a strongly acidic group in the slurry used in the titration, and the amount of the alkali required for the second region is equal to the amount of a weakly acidic group in the slurry used in the titration. When condensation of a phosphoric acid group occurs, the weakly acidic group is apparently lost, so that the amount of the alkali required for the second region is decreased as compared with the amount of the alkali required for the first region. On the other hand, the amount of the strongly acidic group agrees with the amount of the phosphorus atom regardless of the presence or absence of condensation. Hence, the simple term "the amount of the phosphoric acid group introduced (or the amount of the phosphoric acid group)" or "the amount of the substituent introduced (or the amount of the substituent)" refers to the amount of the strongly acidic group. Therefore, the value obtained by dividing the amount (mmol) of the alkali required for the first region in the titration curve as obtained above by the solid content (g) in the slurry as a titration target becomes the amount (mmol/g) of the phosphoric acid groups introduced.

Figure 2 is a graph showing the relationship between the amount of NaOH added dropwise to the fibrillated cellulose fibers having carboxy groups and electrical conductivity. The amount of the carboxy groups introduced into the cellulose fibers is measured, for example, as follows. First, a slurry containing cellulose fibers is treated with a strongly acidic ion exchange resin. Subsequently, while adding a sodium hydroxide aqueous solution, a change in the electrical conductivity is observed, and a titration curve as shown in Figure 2 is obtained. As shown in Figure 2, the titration curve is divided into a first region that corresponds to until an increment (inclination) in the electric conductivity becomes almost constant after the electric conductivity has been reduced, and a second region that corresponds to until an increment (inclination) in the conductivity is increased. It is to be noted that the boundary point between the first region and the second region is defined as a point at which the second-order differential value of the conductivity, namely, the amount of change in the increment (inclination) in the conductivity, becomes maximum. The value obtained by dividing the amount (mmol) of the alkali required for the first region in the titration curve by the solid content (g) in the ultrafine cellulose fiber-containing slurry as a titration target is defined to be the amount (mmol/g) of carboxy groups introduced.

It is to be noted that the amount of phosphoric acid groups and the amount of carboxy groups are values obtained when the counterions of these groups are hydrogen ions ($H^+$). When other counterions are introduced and the counterions cannot be removed by a treatment with an ion exchange resin, for example, an acid treatment or the like may be carried out sufficient times, so that such other counterions may be converted to hydrogen ions, and thereafter, the measurement may be carried out. In addition, when the titration intervals of the sodium hydroxide aqueous solution are too short in the measurement of the amount of substituents by the titration method, the amount of substituents may become lower than the actual amount. Accordingly, it is desired to titrate the sodium hydroxide aqueous solution with appropriate titration intervals, for example, to titrate a 0.1 N sodium hydroxide aqueous solution in each amount of 50 μL for every 30 seconds.

Moreover, when the counterions of carboxy groups are substituted with any given cations C to achieve charge equivalent, the denominator is converted to the mass of cellulose fibers in which cations C are counterions, so that the amount of carboxy groups possessed by the cellulose fibers in which the cations C are counterions (hereinafter referred to as "the amount of carboxy groups (C type)") can be obtained.

Specifically, the amount of carboxy groups introduced is calculated according to the following equation:

$$\text{Amount of carboxy groups (C type) introduced} = \text{amount of carboxy groups (acid type)} / \{1 + (W-1) \times (\text{amount of carboxy groups (acid type)}) / 1000\}.$$

In the equation, W indicates formula weight per valence of cations C (for example, Na: 23; and Al: 9).

< Step of producing cellulose fibers >

< Fiber raw material >

The cellulose fibers are produced from a fiber raw material comprising cellulose. Such a fiber raw material comprising cellulose is not particularly limited, and pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semi-chemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types.

Among the above-listed pulps, for example, wood pulp and deinked pulp are preferable from the viewpoint of easy availability. Moreover, among wood pulps, for example, chemical pulp is more preferable, and kraft pulp and sulfite pulp are further preferable, from the viewpoint that decomposition of cellulose in the pulp is mild, so that cellulose fibers having a long fiber length with a high aspect ratio can be obtained.

As a fiber raw material comprising cellulose, for example, cellulose comprised in Ascidiacea, or bacterial cellulose generated by acetic acid bacteria can also be utilized. In addition, fibers formed from straight-chain nitrogen-containing polysaccharide polymers such as chitin and chitosan can also be used, instead of a fiber raw material containing cellulose.

< Phosphoric acid group introduction step >

When the ultrafine cellulose fibers have phosphoric acid groups, the step of producing the ultrafine cellulose fibers includes a phosphoric acid introduction step. The phosphoric acid group introduction step is a step of allowing at least one compound selected from compounds capable of reacting with hydroxyl groups possessed by a fiber raw material comprising cellulose and thereby introducing phosphoric acid groups into the fiber raw material (hereinafter also referred to as "Compound A") to act on the fiber raw material comprising cellulose. By this step, phosphoric acid group-introduced fibers can be obtained.

In the phosphoric acid group introduction step according to the present embodiment, the reaction of the fiber raw material comprising cellulose with Compound A may be carried out in the presence of at least one type selected from urea and a derivative thereof (hereinafter also referred to as "Compound B"). Otherwise, the reaction of the fiber raw material comprising cellulose with Compound A may also be carried out in the absence of Compound B.

One example of the method of allowing Compound A to act on the fiber raw material in the presence of Compound B may include a method of mixing Compound A and Compound B into the fiber raw material that is in a dry or wet state, or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are dissolved in a solvent to form a solution, or are melted by being heated to a melting point or higher. Among these, because of the high uniformity of the reaction, the compounds are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof. The method of adding Compound A and Compound B is not particularly limited, and in a case where Compound A and Compound B are in the form of a solution, the fiber raw material may be immersed in the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Examples of Compound A used in the present embodiment may include compounds having a phosphorus atom and being capable of forming an ester bond with cellulose. Specific examples of Compound A may include phosphoric acid or a salt thereof, phosphorus acid or a salt thereof, dehydrated condensed phosphoric acid or a salt thereof, and phosphoric anhydride (diphosphorus pentoxide), but are not particularly limited thereto. As such phosphoric acid, those having various purities can be used, and for example, 100% phosphoric acid (orthophosphoric acid) or 85%

phosphoric acid can be used. Phosphorus acid may be, for example, 99% phosphorus acid (phosphonic acid). Dehydrated condensed phosphoric acid is phosphoric acid that is condensed by two or more molecules according to a dehydration reaction, and examples of such dehydrated condensed phosphoric acid may include pyrophosphoric acid and polyphosphoric acid. Examples of the phosphate, phosphite, and salts of dehydrated condensed phosphoric acid may include lithium salts, sodium salts, potassium salts, and ammonium salts of phosphoric acid, phosphorus acid or dehydrated condensed phosphoric acid, and these salts may have various neutralization degrees. Among these, from the viewpoints of high efficiency in introduction of the phosphoric acid groups, an improving tendency of the defibration efficiency in a defibration step described below, low costs, and industrial applicability, phosphoric acid, sodium salts of phosphoric acid, potassium salts of phosphoric acid, or ammonium salts of phosphoric acid are preferable, and phosphoric acid, sodium dihydrogen phosphate, disodium hydrogen phosphate, or ammonium dihydrogen phosphate is more preferable.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is at least one type selected from urea and a derivative thereof, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphoric acid group introduction step, after Compound A, etc. is added or mixed into the fiber raw material, a heat treatment is preferable performed on the fiber raw material. For the temperature of such a heat treatment, it is preferable to select a temperature that allows an efficient introduction of phosphoric acid groups, while suppressing the thermal decomposition or hydrolysis reaction of fibers. For example, the heat treatment temperature is preferably 50°C or higher and 300°C or lower, more preferably 100°C or higher and 250°C or lower, and further preferably 130°C or higher and 200°C or lower. In addition, apparatuses having various heating media can be utilized in the heat treatment, and examples of such an apparatus may include a stirring dryer, a rotary dryer, a disk dryer, a roll-type heater, a plate-type heater, a fluidized bed dryer, an airborne dryer, a vacuum dryer, an infrared heating device, a far-infrared heating device, and a microwave heating device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material can be suppressed, and phosphoric acid groups can be more uniformly introduced into the surface of cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain cellulose fibers with a high axial ratio.

The time for the heat treatment is preferably 1 second or more and 300 minutes or less, more preferably 1

second or more and 1000 seconds or less, and further preferably 10 seconds or more and 800 seconds or less, for example, after moisture has been substantially removed from the fiber raw material. In the present embodiment, by setting the heating temperature and the heating time within an appropriate range, the amount of phosphoric acid groups introduced can be set within a preferred range.

The phosphoric acid group introduction step may be performed at least once, but may also be repeated two or more times. By performing the phosphoric acid group introduction step two or more times, many phosphoric acid groups can be introduced into the fiber raw material. In the present embodiment, as one example of a preferred aspect, the phosphoric acid group introduction step is performed two times.

The amount of phosphoric acid groups introduced into the fiber raw material is, for example, per 1 g (mass) of the cellulose fibers, preferably 0.10 mmol/g or more, more preferably 0.20 mmol/g or more, further preferably 0.50 mmol/g or more, and particularly preferably 1.00 mmol/g or more. On the other hand, the amount of phosphoric acid groups introduced into the fiber raw material is, for example, per 1 g (mass) of the cellulose fibers, preferably 5.20 mmol/g or less, more preferably 3.65 mmol/g or less, and further preferably 3.00 mmol/g or less. By setting the amount of phosphoric acid groups introduced within the above-described range, the content of organic onium ions that can be comprised in the cellulose fibers can be set within an appropriate range, and thereby, the hydrophobicity of a fluffed cellulose obtained by fluffing the cellulose fiber-containing material can be more effectively enhanced.

< Carboxy group introduction step >

When the cellulose fibers have carboxy groups, the step of producing the cellulose fibers includes a carboxy group introduction step. The carboxy group introduction step is carried out by performing ozonation, oxidation according to the Fenton method, or an oxidation treatment such as a TEMPO oxidation treatment, or by treating such a fiber raw material comprising cellulose with a compound having a carboxylic acid-derived group or a derivative thereof, or with an acid anhydride of the compound having a carboxylic acid-derived group or a derivative thereof.

Examples of the compound having a carboxylic acid-derived group may include, but are not particularly limited to, dicarboxylic acid compounds such as maleic acid, succinic acid, phthalic acid, fumaric acid, glutaric acid, adipic acid or itaconic acid, and tricarboxylic acid compounds such as citric acid or aconitic acid. In addition, examples of the derivative of the compound having a carboxylic acid-derived group may include, but are not particularly limited to, an imidized product of the acid anhydride of the compound having a carboxy group and a derivative of the acid anhydride of the compound having a carboxy group. Examples of the imidized product of the acid anhydride of the compound having a carboxy group may include, but are not particularly limited to, imidized products of dicarboxylic acid compounds, such as maleimide, succinimide or phthalimide.

Examples of the acid anhydride of the compound having a carboxylic acid-derived group may include, but are not particularly limited to, acid anhydrides of dicarboxylic acid compounds, such as maleic anhydride, succinic anhydride, phthalic anhydride, glutaric anhydride, adipic anhydride, or itaconic anhydride. In addition, examples of the derivative of the acid anhydride of the compound having a carboxylic acid-derived group may include, but are not particularly limited to, acid anhydrides of the compounds having a carboxy group, in which at least some hydrogen atoms are substituted with substituents such as alkyl groups or phenyl groups, such as dimethylmaleic anhydride, diethylmaleic anhydride, or diphenylmaleic anhydride.

In the case of performing a TEMPO oxidation treatment in the carboxy group introduction step, the treatment is preferably carried out, for example, under conditions of pH 6 or more and pH 8 or less. Such a treatment is also referred to as a neutral TEMPO oxidation treatment. The neutral TEMPO oxidation treatment can be carried out, for example, by adding a pulp used as a fiber raw material, nitroxy radical used as a catalyst, such as TEMPO (2,2,6,6-tetramethylpiperidin-1-oxyl), and sodium hypochlorite used as a sacrifice reagent to a sodium phosphate buffer (pH = 6.8). Further, by allowing sodium chlorite to coexist in the reaction system, aldehyde generated in the oxidation process can be efficiently oxidized to a carboxy group.

Moreover, the TEMPO oxidation treatment may be carried out under conditions of pH 10 or more and pH 11 or less. Such a treatment is also referred to as an "alkaline TEMPO oxidation treatment." The alkaline TEMPO oxidation treatment can be carried out, for example, by adding nitroxy radicals such as TEMPO used as a catalyst, sodium bromide used as a co-catalyst, and sodium hypochlorite used as an oxidizer, to pulp as a fiber raw material.

The amount of carboxy groups introduced into the fiber raw material is different depending on the types of the substituents. When the carboxy groups are introduced, for example, according to TEMPO oxidation, the amount of the carboxy groups introduced is, per 1 g (mass) of the cellulose fibers, preferably 0.10 mmol/g or more, more preferably 0.20 mmol/g or more, further preferably 0.50 mmol/g or more, and particularly preferably 0.90 mmol/g or more. On the other hand, the amount of the carboxy groups introduced is, per 1 g (mass) of the cellulose fibers, preferably 2.50 mmol/g or less, more preferably 2.20 mmol/g or less, and further preferably 2.00 mmol/g or less. Otherwise, when the substituents are carboxymethyl groups, the amount of the carboxy groups introduced may be, per 1 g (mass) of the cellulose fibers, 5.8 mmol/g or less. By setting the amount of the carboxy groups introduced within the above-described range, the content

of organic onium ions that can be comprised in the cellulose fibers can be set within an appropriate range, and thereby, the hydrophobicity of a fluffed cellulose obtained by fluffing the cellulose fiber-containing material can be more effectively enhanced.

< Washing step >

In the method for producing cellulose fibers according to the present embodiment, a washing step may be performed on the anionic group-introduced fibers, as necessary. The washing step is carried out by washing the anionic group-introduced fibers, for example, with water or an organic solvent. In addition, the washing step may be performed after each step as described below, and the number of washing operations performed in each washing step is not particularly limited.

< Alkali treatment step (neutralization treatment step) >

When the cellulose fibers are produced, an alkali treatment (neutralization treatment) may be performed on the fiber raw material after the anionic group introduction step. The method of the alkali treatment is not particularly limited. For example, a method of immersing the anionic group-introduced fibers in an alkaline solution may be applied.

The alkali compound contained in the alkaline solution is not particularly limited, and it may be an inorganic alkaline compound or an organic alkali compound. In the present embodiment, because of high versatility, for example, sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the anionic group-introduced fibers in the alkali solution in the alkali treatment step is not particularly limited, and for example, it is preferably 5 minutes or more and 30 minutes or less, and more preferably 10 minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the anionic group-introduced fibers.

In order to reduce the amount of the alkaline solution used in the alkali treatment step, the anionic group-introduced fibers may be washed with water or an organic solvent after the anionic group introduction step and before the alkali treatment step. Also, a washing step is preferably established after completion of the alkali treatment step.

< Acid treatment step >

When the cellulose fibers are produced, an acid treatment may be performed on the fiber raw material after the anionic group introduction step. For example, an anionic group introduction step, an acid treatment, and an alkali treatment may be performed in this order.

Such an acid treatment method is not particularly limited, and for example, a method of immersing the fiber raw material in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the fiber raw material.

< Defibration treatment >

A defibration treatment may be performed on the anionic group-introduced fiber, as necessary. However, in the present invention, such a defibration treatment needs to be performed to such an extent that the yield of the cellulose fiber-containing material measured by the aforementioned method does not become lower than 50% by mass. For example, a defibration treatment method or defibration treatment conditions are selected, as appropriate, so that the yield of the cellulose fiber-containing material can be preferably prevented from being lower than 50% by mass. Besides, in the present invention, an aspect in which a defibration treatment is not performed on the anionic group-introduced fibers is also preferable.

In the defibration treatment step, for example, a defibration treatment apparatus can be used. Such a defibration treatment apparatus is not particularly limited, and for example, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described defibration treatment apparatuses, it is more preferable to use a disc-type refiner or a conical refiner.

In the defibration treatment step, for example, the anionic group-introduced fibers are preferably diluted with a dispersion medium to form a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the cellulose fibers upon the defibration treatment can be determined, as appropriate. In addition, in a slurry obtained by dispersing the anionic group-introduced fibers in a dispersion medium, solids other than the anionic group-introduced fibers, such as hydrogen-binding urea, may be comprised.

(Organic onium ions)

The cellulose fiber-containing material of the present invention comprises organic onium ions as counterions of the anionic groups possessed by the cellulose fibers. In the present invention, at least some organic onium ions are present as counterions of the cellulose fibers, but free organic onium ions may be present in the cellulose fiber-containing material.

The organic onium ions satisfy at least one condition selected from the following (a) and (b):

(a) containing a hydrocarbon group having 5 or more carbon atoms; and
(b) having a total carbon number of 17 or more.

That is to say, the cellulose fibers comprise at least one selected from organic onium ions containing a hydrocarbon group having 5 or more carbon atoms and organic onium ions having a total carbon number of 17 or more. By using the organic onium ions satisfying at least one condition selected from the above (a) and (b), the hydrophobicity of a fluffed cellulose obtained by fluffing the cellulose fiber-containing material can be enhanced.

The hydrocarbon group having 5 or more carbon atoms is preferably an alkyl group having 5 or more carbon atoms or an alkylene group having 5 or more carbon atoms, more preferably an alkyl group having 6 or more carbon atoms or an alkylene group having 6 or more carbon atoms, further preferably an alkyl group having 7 or more carbon atoms or an alkylene group having 7 or more carbon atoms, and particularly preferably an alkyl group having 10 or more carbon atoms or an alkylene group having 10 or more carbon atoms. Among others, the organic onium ions preferably have an alkyl group having 5 or more carbon atoms, and more preferably contain an alkyl group having 5 or more carbon atoms and have a total carbon number of 17 or more.

The organic onium ion is represented by the following formula (A):

[Formula 2]

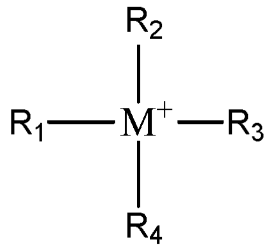

Formula (A)

In the above formula (A), M represents a nitrogen atom or a phosphorus atom, and $R_1$ to $R_4$ each independently represent a hydrogen atom or an organic group, wherein at least one of $R_1$ to $R_4$ represents an organic group containing 5 or more carbon atoms, or that the total number of carbon atoms contained in $R_1$ to $R_4$ is 17 or more.

Among others, M is preferably a nitrogen atom. Specifically, the organic onium ion is preferably an organic ammonium ion. Moreover, it is preferable that at least one of $R_1$ to $R_4$ is an alkyl group containing 5 or more carbon atoms, and that the total number of carbon atoms contained in $R_1$ to $R_4$ is 17 or more.

Examples of such an organic onium ion may include lauryltrimethyl ammonium, cetyltrimethyl ammonium, stearyltrimethyl ammonium, octyldimethylethyl ammonium, lauryldimethylethyl ammonium, didecyldimethyl ammonium, lauryldimethylbenzyl ammonium, tributylbenzyl ammonium, methyltri-n-ocyl ammonium, hexyl ammonium, n-octyl ammonium, dodecyl ammonium, tetradecyl ammonium, hexadecyl ammonium, stearyl ammonium, N,N-dimethyldodecyl ammonium, N,N-dimethyltetradecyl ammonium, N,N-dimethylhexadecyl ammonium, N,N-dimethyl-n-octadecyl ammonium, dihexyl ammonium, di(2-ethylhexyl) ammonium, di-n-octyl ammonium, didecyl ammonium, didodecyl ammonium, didecylmethyl ammonium, N,N-didodecylmethyl ammonium, polyoxyethylene dodecyl ammonium, alkyldimethylbenzyl ammonium, di-n-alkyldimethyl ammonium, behenyltrimethyl ammonium, tetraphenyl phosphonium, tetraoctyl phosphonium, acetonyltriphenyl phosphonium, allyltriphenyl phosphonium, amyltriphenyl phosphonium, benzyltriphenyl phosphonium, ethyltriphenyl phosphonium, diphenylpropyl phosphonium, triphenyl phosphonium, tricyclohexyl phosphonium, and tri-n-octyl phosphonium. Besides, the alkyl group in alkyldimethylbenzyl ammonium or di-n-alkyldimethyl ammonium may be, for example, a straight chain alkyl group having 8 or more and 18 or less carbon atoms.

Besides, as shown in the formula (A), the center element of the organic onium ion binds to a total of 4 groups or hydrogen atoms. When the aforementioned organic onium ion, the center element of which binds to less than 4 groups, hydrogen atom(s) bind to the rest(s), so as to form an organic onium ion(s). For example, in the case of N,N-didodecylmethyl ammonium, it can be determined from the name thereof that two dodecyl groups and one methyl group bind thereto. In this case, a hydrogen atom binds to the remaining one to form an organic onium ion.

When the organic onium comprises O atoms, the mass ratio of C atoms to the O atoms (C/O ratio) is preferably large, and for example, $C/O > 5$ is preferable. By setting the C/O ratio at greater than 5, a cellulose fiber concentrate can be easily obtained when the organic onium ions or compounds that form the organic onium ions as a result of neutralization are added to the cellulose fiber-containing slurry.

The molecular weight of the organic onium ion is preferably 2000 or less, and more preferably 1800 or less. By setting the molecular weight of the organic onium ion within the above-described range, the handling ability of the cellulose fibers can be enhanced. In addition, by setting the molecular weight of the organic onium ions within the above-described range, a decrease in the content of the cellulose fibers in the cellulose fiber-containing material can be suppressed.

The content of the organic onium ions is 1.0% by mass or more, more preferably 1.5% by mass or more, and further preferably 2.0% by mass or more, with respect to the total mass of the cellulose fiber-containing material. On the other hand, the content of the organic onium ions is preferably 90% by mass or less, and more preferably 80% by mass or less, with respect to the total mass of the cellulose fiber-containing material.

In addition, the content of the organic onium ions in the cellulose fiber-containing material is preferably from 0.5 times to 2 times the molar amount of the anionic groups contained in the cellulose fibers, but is not particularly limited thereto. Besides, the content of the organic onium ions can be measured by tracking atoms typically contained in the organic onium ions. Specifically, when the organic onium ions are ammonium ions, the amount of nitrogen atoms is measured, and when the organic onium ions are phosphonium ions, the amount of phosphorus atoms is measured. When the cellulose fibers comprise nitrogen atoms or phosphorus atoms, as well as the organic onium ions, a method of extracting only the organic onium ions, for example, an extraction operation using an acid may be carried out, and thereafter, the amount of atoms of interest may be measured.

As mentioned above, the organic onium ions are preferably ions exhibiting hydrophobicity. That is to say, a fluffed cellulose obtained by fluffing the cellulose fiber-containing material of the present invention has organic onium

ions, and thereby, the fluffed cellulose can exhibit hydrophobicity. Further, as a result, the affinity of the fluffed cellulose for an organic solvent or a resin can be enhanced.

(Optional components)

The cellulose fiber-containing material may consist of cellulose fibers having anionic groups and organic onium ions, but it may further comprise optional components.

Examples of the optional components may include, for example, surfactants, organic ions, coupling agents, inorganic layered compounds, inorganic compounds, leveling agents, antiseptics, antifoaming agents, organic particles, lubricants, antistatic agents, ultraviolet protectors, dyes, pigments, stabilizers, magnetic powders, orientation promoters, plasticizers, dispersing agents, crosslinkers, and binders.

The content of such optional components in the cellulose fiber-containing material is preferably 40% by mass or less, more preferably 30% by mass or less, and further preferably 20% by mass or less, with respect to the total mass of the solid contained in the cellulose fiber-containing material.

(Fluffed cellulose)

The present invention also relates to a fluffed cellulose formed by fluffing the aforementioned cellulose fiber-containing material. The fluffed cellulose is considered to be fuzzed cellulose fibers, which are fluffy or vellus hair-state cellulose fibers. The fluffed cellulose of the present invention has favorable fluffiness and hydrophobicity.

The fluffed cellulose recovery rate of the fluffed cellulose is preferably 50% by mass or more, more preferably 60% by mass or more, and further preferably 70% by mass or more. Besides, the fluffed cellulose recovery rate may also be 100% by mass. In addition, the bulk of the fluffed cellulose is preferably 5 mL/g or more, more preferably 10 mL/g or more, and further preferably 20 mL/g or more. Besides, the upper limit value of the bulk of the fluffed cellulose is not particularly limited, and it is preferably 100 mL/g or less. When the fluffed cellulose recovery rate of the fluffed cellulose is within the above-described range and the bulk of the fluffed cellulose is within the above-described range, the fluffiness of the fluffed cellulose can be evaluated to be favorable.

As mentioned above, the hydrophobicity of the fluffed cellulose can be evaluated based on the degree of precipitation after ion exchange water is poured onto the fluffed cellulose. The precipitation percentage of the fluffed cellulose is preferably 50% by mass or less, more preferably 40% by mass or less, and further preferably 30% by mass or less. Further, the precipitation percentage of the fluffed cellulose is particularly preferably 10% by mass or less.

Also, the fluffed cellulose is preferably compressible, namely, it is preferable that the bulk of the fluffed cellulose is high in a static state, but that the volume thereof is reduced by physical compressive force. When the volume of a fluffed cellulose in a static state is defined as $V_i$, and the volume of a compressed fluffed cellulose is defined as $V_f$, the compression rate is indicated by $V_i/V_f$. The compression rate (the value of $V_i/V_f$) of the fluffed cellulose is preferably 5 or more, more preferably 10 or more, further preferably 20 or more, and still further preferably 50 or more.

(Method for producing cellulose fiber-containing material)

The step of producing the cellulose fiber-containing material includes a step of adding organic onium ions or compounds that form the organic onium ions as a result of neutralization to a slurry containing cellulose fibers having anionic groups. Specifically, the aforementioned organic onium ions or compounds that form the organic onium ions as a result of neutralization are added to the cellulose fiber-containing slurry obtained by the aforementioned step. At this time, the organic onium ions are preferably added in the form of a solution containing the organic onium ions, and are more preferably added in the form of an aqueous solution containing the organic onium ions.

The aqueous solution containing the organic onium ions generally comprises the organic onium ions and counterions (anions). Upon preparation of the aqueous solution of the organic onium ions, when the organic onium ions and the corresponding counterions have already formed salts, they may be directly dissolved in water. Upon preparation of the aqueous solution of the organic onium ions, when the organic onium ions and the corresponding counterions have already formed salts, they are preferably dissolved in water or hot water.

In addition, there may also be a case where some organic onium ions are generated only after neutralization with an acid, as in the case of dodecylamine, for example. In this case, organic onium ions are obtained by a reaction of a compound forming the organic onium ions as a result of neutralization, with an acid. In this case, examples of the acid used in neutralization may include: inorganic acids such as hydrochloric acid, sulfuric acid and nitric acid; and organic acids such as lactic acid, formic acid and oxalic acid. In an aggregation step, a compound forming organic onium as a result of neutralization may be directly added to the cellulose fiber-containing slurry, and the anionic groups comprised in the cellulose fibers may be converted as counterions to organic onium ions.

The additive amount of the organic onium ions is preferably 2% by mass or more, more preferably 10% by

mass or more, further preferably 50% by mass or more, and particularly preferably 100% by mass or more, with respect to the total mass of the cellulose fibers. On the other hand, the additive amount of the organic onium ions is preferably 1000% by mass or less with respect to the total mass of the cellulose fibers.

Moreover, the number of moles of the organic onium ions to be added is preferably 0.2 times or more, more preferably 0.5 time or more, and further preferably 1.0 times or more the value obtained by multiplying the amount (the number of moles) of anionic groups comprised in the cellulose fibers by the valence. On the other hand, the number of moles of the organic onium ions to be added is preferably 10 times or less the value obtained by multiplying the amount (the number of moles) of anionic groups comprised in the cellulose fibers by the valence.

When the organic onium ions are added to the cellulose fiber-containing slurry, followed by stirring, an aggregate is generated in the cellulose fiber-containing slurry. This aggregate is generated as a result of aggregation of the cellulose fibers having organic onium ions as counterions. In the present description, such an aggregate is also referred to as a cellulose fiber condensate. The cellulose fiber-containing slurry, in which an aggregate is generated, is subjected to vacuum filtration, so as to recover a cellulose fiber aggregate (concentrate).

The obtained cellulose fiber aggregate may be washed with ion exchange water. By repeatedly washing the cellulose fiber aggregate with ion exchange water, redundant organic onium ions and the like comprised in the cellulose fiber aggregate can be removed.

The ratio of the content of N atoms to the content of P atoms (N/P value) in the obtained cellulose fiber aggregate is preferably greater than 1.2, and more preferably greater than 2.0. On the other hand, the ratio of the content of N atoms to the content of P atoms (N/P value) in the obtained cellulose fiber aggregate is preferably 5.0 or less. Besides, the content of P atoms and the content of N atoms in the cellulose fiber aggregate can be appropriately calculated by an elemental analysis. As such an elemental analysis, for example, a trace nitrogen analysis, a molybdenum blue method, etc. can be carried out after an appropriate pre-treatment. When a composition other than the cellulose fiber aggregate comprises P atoms or N atoms, the composition may be separated from the cellulose fiber aggregate according to a suitable method, and an elemental analysis may be then carried out.

The solid concentration of the obtained cellulose fiber aggregate is preferably 40% by mass or more, more preferably 60% by mass or more, and further preferably 80% by mass or more. Besides, the solid concentration of the cellulose fiber aggregate may also be 100% by mass.

The obtained cellulose fiber aggregate (concentrate) is the cellulose fiber-containing material in the present invention. The following post-treatment steps may be further established. Examples of the post-treatment step may include a drying step, an aging step, a spray drying step, a granulation step, a sheet formation step, a heating step, a moisturizing step, a pulverization step, a spraying step, an immersion step, a filtration step, a freezing step, a sublimation step, a squeeze dehydration step, a pressure dehydration step, a centrifugal dehydration step, and a surface treatment step. Among others, a drying step is preferably established as a post-treatment step, and more preferably, the drying step is preferably carried out under constant temperature and constant humidity conditions.

The temperature at which the cellulose fiber aggregate (concentrate) is dried under constant temperature and constant humidity conditions is preferably 10°C or higher, and more preferably 20°C or higher. The temperature applied under constant temperature and constant humidity conditions is preferably 100°C or lower, more preferably 80°C or lower, and further preferably 60°C or lower. The relative humidity applied under constant temperature and constant humidity conditions is preferably 20% or more, and more preferably 30% or more. On the other hand, the relative humidity applied under constant temperature and constant humidity conditions is preferably 70% or less. Besides, the drying time applied upon the drying under constant temperature and constant humidity conditions is preferably 10 minutes or more, more preferably 20 minutes or more, and further preferably 30 minutes or more. On the other hand, the drying time upon the drying under constant temperature and constant humidity conditions is preferably 100 hours or less, and more preferably 80 hours or less.

(Method for producing fluffed cellulose)

A fluffed cellulose is obtained, for example, by subjecting the aforementioned cellulose fiber-containing material to a cracking treatment. Specifically, the cellulose fiber-containing material is preferably cracked at a rotation rate of 1000 rpm or more and 100000 rpm or less for 0.01 second or more and 1000 seconds or less to obtain a fluffed cellulose. The apparatus used herein may be, for example, Lab Mill Surplus manufactured by OSAKA CHEMICAL Co., Ltd., etc.

The cellulose fiber-containing material subjected to such a cracking treatment is preferably a predetermined sheet material. For example, the cellulose fiber-containing material is diluted with ion exchange water to a concentration of 1% by mass, and it is then adjusted, such that the basis weight relative to absolute dry mass becomes 200 g/m$^2$. Thereafter, the resultant is filtrated under reduced pressure again to obtain a sheet-state product, which is then dried at 30°C and at a relative humidity of 40%, so that it becomes a constant amount, thereby obtaining a cellulose fiber-containing sheet. The thus obtained sheet is preferably subjected to a cracking treatment.

Other than this method, the cellulose fiber-containing material may be fluffed in a dry or semi-dry state, using

various types of refiners. Otherwise, the cellulose fiber-containing material may also be fluffed using an apparatus such as a pin mill or a hammer mill.

(Composition)

The present invention may also relate to a composition comprising the aforementioned cellulose fiber-containing material or the aforementioned fluffed cellulose and an organic solvent.

The organic solvent is not particularly limited, and examples of the organic solvent may include methanol, ethanol, n-propyl alcohol, isopropyl alcohol (IPA), 1-butanol, m-cresol, glycerin, acetic acid, pyridine, tetrahydrofuran (THF), acetone, methyl ethyl ketone (MEK), ethyl acetate, aniline, N-methyl-2-pyrrolidone (NMP), dimethyl sulfoxide (DMSO), N,N-dimethylformamide (DMF), hexane, cyclohexane, benzene, toluene, p-xylene, diethyl ether, and chloroform. Among these, N-methyl-2-pyrrolidone (NMP), dimethyl sulfoxide (DMSO), methyl ethyl ketone (MEK), toluene, and methanol are preferably used.

The dielectric constant of the organic solvent at 25°C is preferably 60 or less, and more preferably 50 or less. Since the cellulose fibers used in the present invention can exhibit excellent dispersibility even in an organic solvent having a low dielectric constant, the dielectric constant of the organic solvent at 25°C may be 40 less, 30 or less, or 20 or less.

The $\delta p$ of the Hansen solubility parameter (HSP value) of the organic solvent is preferably 5 $MPa^{1/2}$ or more and 20 $MPa^{1/2}$ or less, more preferably 10 $MPa^{1/2}$ or more and 19 $MPa^{1/2}$ or less, and further preferably 12 $MPa^{1/2}$ or more and 18 $MPa^{1/2}$ or less. In addition, the hydrogen bond parameter $\delta h$ of the HSP value is preferably 20 $MPa^{1/2}$ or less, more preferably 15 $MPa^{1/2}$ or less, and further preferably 7.5 $MPa^{1/2}$ or less. On the other hand, the $\delta h$ is preferably 1.0 $MPa^{1/2}$ or more. The cellulose fiber-containing material of the present invention is favorably dispersed in an organic solvent having the hydrogen bond parameter of the HSP value that is a somewhat low value.

The content of the organic solvent in the composition is preferably 10% by mass or more, and more preferably 50% by mass or more, with respect to the total mass of the solid contained in the composition. On the other hand, the content of the organic solvent is preferably 99.9% by mass or less, more preferably 99.0% by mass or less, and further preferably 95.0% by mass or less, with respect to the total mass of the solid contained in the composition.

Besides, the dispersion medium of the composition is preferably an organic solvent, but the composition may further contain water, as well as the organic solvent. In this case, the content of the water is preferably 10% by mass or less, more preferably 5% by mass or less, and further preferably 1% by mass or less, with respect to the total mass of the composition.

Moreover, the present invention may also relate to a composition comprising the aforementioned cellulose fiber-containing material or the aforementioned fluffed cellulose and a resin.

The type of such a resin is not particularly limited, and examples of the resin may include a thermoplastic resin and a thermosetting resin.

Examples of the resin may include a polyolefin resin, an acrylic resin, a polycarbonate resin, a polyester resin, a polyamide resin, a silicone resin, a fluorine resin, a chlorine resin, an epoxy resin, a melamine resin, a phenolic resin, a polyurethane resin, a diallyl phthalate resin, an alcoholic resin, a cellulose derivative, and precursors of these resins. Besides, examples of the cellulose derivative may include carboxymethyl cellulose, methyl cellulose, and hydroxyethyl cellulose.

The cellulose fiber-containing material or the fluffed cellulose may comprise a resin precursor as a resin. The type of such a resin precursor is not particularly limited, and examples thereof may include a thermoplastic resin precursor and a thermosetting resin precursor. The thermoplastic resin precursor means a monomer or an oligomer having a relatively low molecular weight, which is used to produce a thermoplastic resin. The thermosetting resin precursor means a monomer or an oligomer having a relatively low molecular weight, which causes a polymerization reaction or a crosslinking reaction by the action of light, heat or a hardening agent, and as a result, may form a thermosetting resin.

The cellulose fiber-containing material or the fluffed cellulose may further comprise a water-soluble polymer as a resin that is different from the aforementioned resin type. Examples of the water-soluble polymer may include: synthetic water-soluble polymers (e.g., a carboxy vinyl polymer, polyvinyl alcohol, an alkyl methacrylate-acrylic acid copolymer, polyvinyl pyrrolidone, sodium polyacrylate, polyethylene glycol, diethylene glycol, triethylene glycol, propylene glycol, dipropylene glycol, polypropylene glycol, isoprene glycol, hexylene glycol, 1,3-butylene glycol, polyacrylamide, etc.); thickening polysaccharides (e.g., xanthan gum, guar gum, tamarind gum, carrageenan, locust bean gum, quince seed, alginic acid, pullulan, carrageenan, pectin, etc.); starches, such as cationized starch, raw starch, oxidized starch, etherified starch, esterified starch, and amylose; glycerins, such as glycerin, diglycerin, and polyglycerin; and hyaluronic acid and a metal salt of hyaluronic acid.

The content of the resin in the composition is preferably 10% by mass or more, and more preferably 50% by mass or more, with respect to the total mass of the solid contained in the composition. On the other hand, the content of the resin is preferably 99.9% by mass or less, more preferably 99.0% by mass or less, and further preferably 95.0%

by mass or less, with respect to the total mass of the solid contained in the composition.

(Intended use)

The cellulose fiber-containing material of the present invention is preferably used for the production of a fluffed cellulose. The obtained fluffed cellulose is preferably used to be mixed with an organic solvent or a resin. The fluffed cellulose is particularly preferably used to be mixed with an organic solvent comprising a resin component. For example, an organic solvent is removed from a resin composition consisting of a fluffed cellulose, an organic solvent and a resin, and the residue is then molded, so that a molded body or a sheet can be produced. Moreover, such a resin composition consisting of a fluffed cellulose, an organic solvent and a resin can also be used as a paint. Furthermore, a fluffed cellulose may be directly mixed with a resin component according to a melt kneading method, etc. It is to be noted that, upon such melt kneading, water or an organic solvent may be comprised in a kneaded product.

The cellulose fiber-containing material of the present invention may not be used for the production of a fluffed cellulose. For example, the cellulose fiber-containing material of the present invention may be used in the production of a molded body or a sheet, without being fluffed.

Further, a molded body or a sheet, which is obtained by molding a resin composition consisting of a fluffed cellulose, an organic solvent and a resin, or a resin composition consisting of a cellulose fiber-containing material, an organic solvent and a resin, is also suitable for intended uses, such as reinforcing materials, interior materials, exterior materials, wrapping materials, electronic materials, optical materials, acoustic materials, processing materials, transport equipment components, electronic equipment components, and electrochemical element components.

Examples

The present invention will be more specifically described in the following examples. However, the following examples are not intended to limit the scope of the present invention.

< Production Example 1 >

The needle bleached kraft pulp manufactured by Oji Paper Co., Ltd. (solid content: 93% by mass; basis weight: 208 $g/m^2$, sheet-shaped; Canadian Standard Freeness (CSF) measured according to JIS P 8121 after defibration: 700 ml) was used as a raw material pulp.

A phosphorylation treatment was performed on this raw material pulp as follows. First, a mixed aqueous solution of ammonium dihydrogen phosphate and urea was added to 100 parts by mass (absolute dry mass) of the above raw material pulp, and the obtained mixture was adjusted to result in 45 parts by mass of the ammonium dihydrogen phosphate, 120 parts by mass of the urea and 150 parts by mass of water, so as to obtain a chemical-impregnated pulp. Subsequently, the obtained chemical-impregnated pulp was heated in a hot-air dryer at 165°C for 200 seconds, so that phosphoric acid groups were introduced into cellulose in the pulp, thereby obtaining a phosphorylated pulp 1.

Subsequently, a washing treatment was performed on the obtained phosphorylated pulp 1. The washing treatment was carried out by repeating the operation to pour 10 L of ion exchange water onto 100 g (absolute dry mass) of the phosphorylated pulp 1 to obtain a pulp dispersed solution, which was then uniformly dispersed by stirring, followed by filtration and dehydration. The washing was terminated at a time point at which the electric conductivity of the filtrate became 100 $\mu$S/cm or less.

Subsequently, a neutralization treatment was performed on the phosphorylated pulp 1 after the washing as follows. First, the phosphorylated pulp 1 after the washing was diluted with 10 L of ion exchange water, and then, while stirring, a 1 N sodium hydroxide aqueous solution was slowly added to the diluted solution to obtain a phosphorylated pulp slurry having a pH value of 12 or more and 13 or less. Thereafter, the phosphorylated pulp slurry was dehydrated, so as to obtain a neutralized phosphorylated pulp 1. Subsequently, the above-described washing treatment was performed on the phosphorylated pulp after the neutralization treatment.

The infrared absorption spectrum of the obtained phosphorylated pulp 1 was measured by FT-IR. As a result, absorption based on the phosphoric acid groups was observed around 1230 $cm^{-1}$, and thus, addition of the phosphoric acid groups to the pulp was confirmed.

Moreover, the obtained phosphorylated pulp 1 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

The fiber width of the obtained phosphorylated pulp 1 (cellulose fibers) and the supernatant yield measured by the after-mentioned method are shown in the tables below. Besides, the amount of phosphoric acid groups (the amount of strong acid groups) measured by the after-mentioned measurement method was 1.45 mmol/g.

74 Parts by mass of an aqueous solution containing 3.86% by mass of di-n-alkyldimethyl ammonium chloride

(wherein the number of carbon atoms in the alkyl chain was 16 or 18) was slowly added to 100 parts by mass of a suspension of 2% by mass of the phosphorylated pulp 1 obtained by dilution with ion exchange water, while stirring. As a result, the cellulose fibers were aggregated. The obtained cellulose fiber aggregate was recovered by filtration under reduced pressure, and further, was repeatedly washed with ion exchange water to remove redundant di-n-alkyldimethyl ammonium chloride contained in the cellulose fiber aggregate, eluted ions, and the like, thereby obtaining a cake-like cellulose fiber-containing material.

< Production Example 2 >

A cellulose fiber-containing material was obtained in the same manner as that of Production Example 1, with the exception that an aqueous solution of N,N-didodecylmethylamine lactate prepared by adding 0.44 parts by mass of lactic acid to 74 parts by mass of an aqueous solution containing 2.43% by mass of N,N-didodecylmethylamine was used, instead of 74 parts by mass of the aqueous solution containing 3.86% by mass of di-n-alkyldimethyl ammonium chloride of Production Example 1.

< Production Example 3 >

A cellulose fiber-containing material was obtained in the same manner as that of Production Example 1, with the exception that an aqueous solution of polyoxyethylenedodecylamine lactate prepared by adding 0.44 parts by mass of lactic acid to 74 parts by mass of an aqueous solution containing 1.83% by mass of polyoxyethylenedodecylamine (wherein the number of oxyethylene residues was 2) was used, instead of 74 parts by mass of the aqueous solution containing 3.86% by mass of di-n-alkyldimethyl ammonium chloride of Production Example 1.

< Production Example 4 >

A cellulose fiber-containing material was obtained in the same manner as that of Production Example 1, with the exception that 74 parts by mass of an aqueous solution containing 2.33% by mass of alkyldimethylbenzyl ammonium chloride was used, instead of 74 parts by mass of the aqueous solution containing 3.86% by mass of di-n-alkyldimethyl ammonium chloride of Production Example 1.

< Production Example 5 >

The needle bleached kraft pulp manufactured by Oji Paper Co., Ltd. (solid content: 93% by mass; basis weight: 208 g/$m^2$, sheet-shaped; Canadian Standard Freeness (CSF) measured according to JIS P 8121 after defibration: 700 ml) was used as a raw material pulp. A TEMPO oxidation treatment was performed on this raw material pulp as follows.

First, the above-described raw material pulp corresponding to 100 parts by mass (dry mass), 1.6 parts by mass of TEMPO (2,2,6,6-tetramethylpiperidin-1-oxyl), and 10 parts by mass of sodium bromide were dispersed in 10000 parts by mass of water. Subsequently, an aqueous solution containing 13% by mass of sodium hypochlorite was added to the obtained solution, such that the amount of sodium hypochlorite became 3.8 mmol with respect to 1.0 g of the pulp, so as to start the reaction. During the reaction, the pH was kept at pH 10 or more and pH 10.5 or less by the dropwise addition of a 0.5 M sodium hydroxide aqueous solution. The time point at which change in the pH was no longer seen was considered to be termination of the reaction.

Subsequently, a washing treatment was performed on the obtained TEMPO-oxidized pulp. The washing treatment was carried out by repeating the operation of dehydrating the pulp slurry after the TEMPO oxidation to obtain a dehydrated sheet, then pouring 5000 parts by mass of ion exchange water onto the dehydrated sheet, which was then uniformly dispersed by stirring, and was then subjected to filtration and dehydration. The washing was terminated at a time point at which the electric conductivity of the filtrate became 100 $\mu$S/cm or less.

In addition, the obtained TEMPO-oxidized pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the TEMPO-oxidized pulp was confirmed to have cellulose type I crystals.

The fiber width of the obtained TEMPO-oxidized pulp (cellulose fibers) and the supernatant yield measured by the aforementioned method are shown in the tables below. Besides, the amount of carboxy groups measured by the aforementioned method was 1.30 mmol/g.

A cellulose fiber-containing material was obtained in the same manner as that of Production Example 1, with the exceptions that the obtained TEMPO-oxidized pulp was used, instead of the phosphorylated pulp 1 immediately before addition of an aqueous solution containing organic onium salts, and that the additive number of the aqueous solution containing 3.86% by mass of di-n-alkyldimethyl ammonium chloride (wherein the number of carbon atoms in the alkyl chain was 16 or 18) was set to be 39 parts by mass.

< Production Example 6 >

A phosphorylated pulp 2 was obtained by performing the same operations as those of Production Example 1, with exception that 33 parts by mass of phosphorus acid (phosphonic acid) was used instead of 45 parts by mass of ammonium dihydrogen phosphate.

The infrared absorption spectrum of the obtained phosphorylated pulp 2 was measured by FT-IR. As a result, absorption based on phosphonic acid groups as tautomers of phosphorus acid groups, P = O, was observed around 1210 $cm^{-1}$, and thus, addition of phosphorous acid groups (phosphonic acid groups) to the pulp was confirmed.

Moreover, the obtained phosphorylated pulp 2 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

The fiber width of the obtained phosphorylated pulp 2 (cellulose fibers) and the supernatant yield measured by the aforementioned centrifugation method are shown in the tables below. Besides, the amount of phosphoric acid groups (the amount of strong acid groups) measured by the measurement method described in the after-mentioned [Measurement of amount of phosphoric acid groups] was 1.50 mmol/g. The amount of weak acid groups was 0.13 mmol/g.

A cellulose fiber-containing material was obtained in the same manner as that of Production Example 1, with the exceptions that the phosphorylated pulp 2 was used instead of the phosphorylated pulp 1 immediately before addition of an aqueous solution containing organic onium salts, and that the additive number of the aqueous solution containing 3.86% by mass of di-n-alkyldimethyl ammonium chloride (wherein the number of carbon atoms in the alkyl chain was 16 or 18) was set to be 49 parts by mass.

< Production Example 7 >

The phosphorylation treatment and the washing treatment performed in Production Example 1 were carried out, each once in this order, on the washed phosphorylated pulp 1 in Production Example 1 to obtain a phosphorylated pulp 3.

The infrared absorption spectrum of the obtained phosphorylated pulp 3 was measured by FT-IR. As a result, absorption based on the phosphoric acid groups was observed around 1230 $cm^{-1}$, and thus, addition of the phosphoric acid groups to the pulp was confirmed.

Moreover, the obtained phosphorylated pulp 3 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

The fiber width of the obtained phosphorylated pulp 3 (cellulose fibers) and the supernatant yield measured by the aforementioned method are shown in the tables below. Besides, the amount of phosphoric acid groups (the amount of strong acid groups) measured by the after-mentioned measurement method was 2.00 mmol/g.

A cellulose fiber-containing material was obtained in the same manner as that of Production Example 1, with the exceptions that the phosphorylated pulp 3 was used instead of the phosphorylated pulp 1 immediately before addition of an aqueous solution containing organic onium salts, and that the additive number of the aqueous solution containing 3.86% by mass of di-n-alkyldimethyl ammonium chloride (wherein the number of carbon atoms in the alkyl chain was 16 or 18) was set to be 100 parts by mass.

< Production Example 8 >

An unbleached phosphorylated pulp was obtained in the same manner as that of Production Example 1, with the exception that the unbleached needle bleached kraft pulp manufactured by Oji Paper Co., Ltd. (solid content: 93% by mass; basis weight: 208 $g/m^2$, sheet-shaped; Canadian Standard Freeness (CSF) measured according to JIS P 8121 after defibration: 700 ml; kappa number: 45) was used as a raw material pulp.

The infrared absorption spectrum of the obtained unbleached phosphorylated pulp was measured by FT-IR. As a result, absorption based on the phosphoric acid groups was observed around 1230 $cm^{-1}$, and thus, addition of the phosphoric acid groups to the pulp was confirmed.

Moreover, the obtained unbleached phosphorylated pulp was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorylated pulp was confirmed to have cellulose type I crystals.

The fiber width of the obtained unbleached phosphorylated pulp (cellulose fibers) and the supernatant yield measured by the aforementioned method are shown in the tables below. Besides, the amount of phosphoric acid groups (the amount of strong acid groups) measured by the after-mentioned measurement method was 1.45 mmol/g.

A cellulose fiber-containing material was obtained in the same manner as that of Production Example 1, with the exception that the unbleached phosphorylated pulp was used instead of the phosphorylated pulp 1 immediately

before addition of an aqueous solution containing organic onium salts.

< Production Examples 9 to 11 >

Ion exchange water was added to the phosphorylated pulp 1 obtained in Production Example 1 to prepare a slurry having a solid concentration of 2% by mass. Using a single disk refiner having a diameter of 12 inches (manufactured by KUMAGAI RIKI KOGYO Co., Ltd.) that was set to be a clearance of 50 $\mu$m and a rotation number of 3000 rpm, this slurry was subjected to a liquid passing treatment, three times (Production Example 9), eight times (Production Example 10), and 35 times (Production Example 11), so as to obtain mechanically treated cellulose fibers. The fiber width of these mechanically treated cellulose fibers and the supernatant yield measured by the after-mentioned method are shown in the tables below. It was confirmed by X-ray diffraction that all of the cellulose fibers mechanically treated under the aforementioned conditions maintained cellulose type I crystals. A cellulose fiber-containing material was obtained in the same manner as that of Production Example 1, with the exception that the obtained mechanically treated cellulose fibers were used, instead of the phosphorylated pulp 1 immediately before addition of an aqueous solution containing organic onium salts.

< Production Examples 12 and 13 >

Ion exchange water was added to the phosphorylated pulp 1 obtained in Production Example 1 to prepare a slurry having a solid concentration of 2% by mass. This slurry was treated using a wet atomization apparatus (manufactured by Sugino Machine Limited, Star Burst) at a pressure of 200 MPa, once (Production Example 12) and six times (Production Example 13), so as to obtain mechanically treated cellulose fibers. The fiber width of these mechanically treated cellulose fibers and the supernatant yield measured by the after-mentioned method are shown in the tables below. It was confirmed by X-ray diffraction that all of the cellulose fibers mechanically treated under the aforementioned conditions maintained cellulose type I crystals. A cellulose fiber-containing material was obtained in the same manner as that of Production Example 1, with the exception that the obtained mechanically treated cellulose fibers were used, instead of the phosphorylated pulp 1 immediately before addition of an aqueous solution containing organic onium salts.

< Production Example 14 >

A cellulose fiber-containing material was obtained in the same manner as that of Production Example 13, with the exception that an aqueous solution of N,N-didodecylmethylamine lactate prepared by adding 0.44 parts by mass of lactic acid to 74 parts by mass of an aqueous solution containing 2.43% by mass of N,N-didodecylmethylamine was used, instead of 74 parts by mass of the aqueous solution containing 3.86% by mass of di-n-alkyldimethyl ammonium chloride in Production Example 13.

< Production Example 15 >

A cellulose fiber-containing material was obtained in the same manner as that of Production Example 13, with the exception that an aqueous solution of polyoxyethylenedodecylamine lactate prepared by adding 0.44 parts by mass of lactic acid to 74 parts by mass of an aqueous solution containing 1.83% by mass of polyoxyethylenedodecylamine (wherein the number of oxyethylene residues was 2) was used, instead of 74 parts by mass of the aqueous solution containing 3.86% by mass of di-n-alkyldimethyl ammonium chloride in Production Example 13.

< Production Example 16 >

A cellulose fiber-containing material was obtained in the same manner as that of Production Example 13, with the exception that 74 parts by mass of an aqueous solution containing 2.33% by mass of alkyldimethylbenzyl ammonium chloride was used, instead of 74 parts by mass of the aqueous solution containing 3.86% by mass of di-n-alkyldimethyl ammonium chloride in Production Example 13.

< Production Example 17 >

Mechanically treated cellulose fibers were obtained in the same manner as that of Production Example 13, with the exception that the TEMPO-oxidized pulp obtained in Production Example 5 was used, instead of the phosphorylated pulp 1 obtained in Production Example 1. The fiber width of these mechanically treated cellulose fibers and the supernatant yield measured by the after-mentioned method are shown in the tables below. It was confirmed by X-ray diffraction that the mechanically treated cellulose fibers also maintained cellulose type I crystals. A cellulose fiber-containing material was obtained in the same manner as that of Production Example 5, with the exception that the obtained mechanically treated cellulose fibers were used, instead of the TEMPO-oxidized pulp immediately before addition of an aqueous solution containing organic onium salts.

< Production Example 18 >

The needle bleached kraft pulp manufactured by Oji Paper Co., Ltd. (solid content: 93% by mass; basis weight: 208 $g/m^2$, sheet-shaped; Canadian Standard Freeness (CSF) measured according to JIS P 8121 after defibration: 700 ml) was defibrated, and was then dehydrated by filtration under reduced pressure to obtain a cake-like cellulose fiber-containing material.

< Production Example 19 >

The phosphorylated pulp 1 obtained in Production Example 1 (before addition of an aqueous solution of di-n-alkyldimethyl ammonium chloride) was dehydrated by filtration under reduced pressure to obtain a cake-like cellulose fiber-containing material.

< Production Example 20 >

1 N Tetrabutyl ammonium hydroxide was used as an alkali in the neutralization treatment of Production Example 1, instead of 1 N sodium hydroxide, so as to obtain a phosphorylated pulp 4 comprising tetrabutyl ammonium as counterions. This phosphorylated pulp 4 was dehydrated by filtration under reduced pressure, to obtain a cake-like cellulose fiber-containing material.

< Examples 1 to 10 and Comparative Examples 1 to 10 >

The cellulose fiber-containing materials obtained in Production Examples 1 to 20 were measured according to the after-mentioned methods, in terms of [1] a yield after wet classification, [2] a fluffed cellulose recovery rate, [3] a bulk, and [4] a precipitation percentage from the water surface. The results are shown in the tables below. Besides, the cellulose fiber-containing materials (Production Examples) used in individual Examples and individual Comparative Examples are shown in the tables below.

< Yield after wet classification >

The obtained cellulose fiber-containing material was immersed in ion exchange water for 24 hours, and was then adjusted to a solid concentration of 20% by mass. The cellulose fiber-containing material was then subjected to a dispersion treatment using a high-speed rotating disperser at a circumferential speed of 10 m/s for 15 minutes. Thereafter, the obtained dispersed solution was subjected to wet classification on a JIS test sieve having an opening of 150 μm, and a yield was then calculated according to the equation shown below. Besides, upon the wet classification, ion exchanged water was showered from the upper portion of the test sieve at a flow rate of 150 mL/sec, so that the cellulose fibers were sufficiently spread onto the test sieve.

In addition, the wet classification was carried out also on a JIS test sieve having an opening 300 μm, and a yield was calculated according to the following equation.

Yield [% by mass] = absolute dry mass of cellulose fiber-containing material remaining on test sieve / absolute dry mass of cellulose fiber-containing material subjected to test x 100.

< Fluffed cellulose recovery rate >

The cellulose fiber-containing material was diluted with ion exchange water to a concentration of 1% by mass, and was then adjusted to a basis weight of 200 $g/m^2$ relative to the absolute dry mass. The resultant was filtrated under reduced pressure again to form a sheet, and the obtained sheet was then dried under conditions of 30°C and a relative humidity of 40%, so that it could become a constant amount, thereby obtaining a cellulose fiber-containing sheet. A section (1 g (0.005 $m^2$) at an absolute dry mass) was cut out of the obtained cellulose fiber-containing sheet, and it was then treated using a crusher with a volume of 75 mL (Lab Mill Surplus) at 20,000 rpm for 20 seconds for fluffing. After

completion of the fluffing treatment, a cellulose fiber-containing material (comprising both a fluffed cellulose and a not-fluffed cellulose) was spread onto a test sieve with an opening of 2 mmφ, and was then gently stirred. The absolute dry mass of a cellulose fiber-containing material (a fluffed cellulose) passing through a mesh was measured, and the fluffed cellulose recovery rate was then calculated according to the following equation.

Fluffed cellulose recovery rate [% by mass] = absolute dry mass of cellulose fiber-containing material passing through test sieve / absolute dry mass of cellulose fiber-containing material before fluffing x 100.

< Bulk >

Cellulose fibers passing through the test sieve having an opening of 2 mmφ upon the calculation of the fluffed cellulose recovery rate were dropped into a measuring cylinder disposed immediately below the test sieve, and after the cellulose fibers had been accumulated in a predetermined volume, the absolute dry mass of the cellulose fibers having a predetermined volume was measured, so as to calculate the bulk (mL/g).

< Precipitation percentage from water surface >

Cellulose fibers passing through the test sieve having an opening of 2 mmφ upon the calculation of the fluffed cellulose recovery rate were dropped into a vessel having a diameter of 40 mmφ disposed at a position 50 mm immediately below the test sieve. Thereafter, ion exchange water was dropped along the wall surface of this vessel at a rate of 20 g/min, so that 50 g of the ion exchange water was gently poured into the vessel. Immediately after the pouring, cellulose fibers coming up to the surface of the water as a result of water repellency and cellulose fibers precipitated to the bottom portion were recovered, separately, and thereafter, the precipitation percentage from the water surface was calculated according to the following equation.

Precipitation percentage [% by mass] from water surface = absolute dry mass of precipitated cellulose fiber-containing material / (absolute dry mass of precipitated cellulose fiber-containing material + absolute dry mass of cellulose fiber-containing material coming up to water surface) x 100.

< Evaluation 1 >

[Measurement of amount of phosphoric acid groups]

The amount of phosphoric acid groups in the cellulose fibers was measured by treating an ultrafine cellulose fiber-containing slurry prepared, as described below, with an ion exchange resin, and then performing titration using alkali. The ultrafine cellulose fiber-containing slurry was produced by sufficiently fibrillating cellulose fibers as targets (i.e., 2% by mass of a cellulose fiber-dispersed solution was treated with a high-pressure homogenizer at 200 MPa six time), and then diluting the ultrafine cellulose fiber-dispersed solution with an ion exchange water to result in a content of 0.2% by mass.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 μL, to the cellulose fiber-containing slurry after completion of the treatment with the ion exchange resin. Specifically, among the calculation results, the alkali amount (mmol) required in a region corresponding to the first region shown in Figure 1 was divided by the solid content (g) in the slurry to be titrated, so as to obtain the amount of phosphoric acid groups (mmol/g).

[Measurement of amount of carboxy groups]

The amount of carboxy groups in the cellulose fibers was measured by treating an ultrafine cellulose fiber-containing slurry prepared, as described below, with an ion exchange resin, and then performing titration using alkali. The ultrafine cellulose fiber-containing slurry was produced by sufficiently fibrillating cellulose fibers as targets (i.e., 2% by mass of a cellulose fiber-dispersed solution was treated with a high-pressure homogenizer at 200 MPa six time), and then diluting the ultrafine cellulose fiber-dispersed solution comprising ultrafine cellulose fibers with an ion exchange water to result in a content of 0.2% by mass.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the electric conductivity value indicated by the slurry was measured while adding an aqueous solution of 0.1 N sodium hydroxide, once 30 seconds, in each amount of 50 μL, to the cellulose fiber-containing slurry after completion of the treatment with the ion exchange resin. Specifically, among the calculation results, the alkali amount (mmol) required in a region corresponding to the first region shown in Figure 2 was divided by the solid content (g) in the slurry to be titrated, so as to obtain the amount of carboxy groups (mmol/g).

[Measurement of supernatant yield]

The supernatant yield of the cellulose fibers was calculated by centrifugation of a cellulose fiber-dispersed solution. The supernatant yield after completion of the centrifugation becomes an indicator of fibrillation degree. The amount of the ultrafine cellulose fibers comprised increases, a high value can be obtained. First, a cellulose fiber-dispersed solution having a solid concentration of 0.1% by mass was prepared, and using a cooled high-speed centrifugal separator (manufactured by KOKUSAN Co. Ltd., H-2000B), the dispersed solution was centrifuged under conditions of 12000 G and 10 minutes. The obtained supernatant was recovered, and the solid concentration thereof was then measured. According to the following equation, the supernatant yield of the cellulose fibers was obtained:

Supernatant yield (% by mass) of cellulose fibers = solid concentration (% by mass) of supernatant / 0.1 x 100.

[Fiber width]

With regard to the cellulose fibers of Production Examples 1 to 8 and 18 to 20, the length average fiber width was measured using Kajaani Fiber Size Analyzer (FS-200) manufactured by Kajaani Automation. With regard to Production Examples 13 to 17, the fiber width was measured by observation with a transmission electron microscope. With regard to Production Examples 9 to 12, the cellulose fibers subjected to Production Example 1, in which cellulose fibers with a width of 1000 nm or less were not substantially present, were used as a reference ($R_0$), the percentage of the weight of cellulose fibers having a fiber width of 1000 nm or less, which were at least present by observation with the aforementioned optical microscope, was calculated. Besides, the concentration (C) of cellulose fibers at the observation was set to be 0.2% by mass, and the area $S_0$ of the observed field of vision was set to be a total of 20 $mm^2$ (20 different images of each area of 1 $mm^2$).

[Table 1]

| | Cellulose fiber-containing material | Cellulose fiber as raw material | | | | | | Counterion | | Yield [mass %] after classification | |
|---|---|---|---|---|---|---|---|---|---|---|---|
| | | Type of pulp | Anionic group | Amount of functional group [mmol/g] | Mechanical treatment | Supernatant yield [mass %] | Fiber width | Counterion of anionic group | Number of carbon atoms | Sieve opening: 150 μm | Sieve opening: 300 μm |
| Ex. 1 | Production Ex. 1 | NBKP | Phosphate group | 1.45 | No | 5 or less | 25 μm *1 | DADMA | C16-18 ×2 C1 ×2 | 95.3 | 89.9 |
| Ex. 2 | Production Ex. 2 | NBKP | Phosphate group | 1.45 | No | 5 or less | 25 μm *1 | DDMA | C12 ×2 C1 ×1 | 94.9 | 87.1 |
| Ex. 3 | Production Ex. 3 | NBKP | Phosphate group | 1.45 | No | 5 or less | 25 μm *1 | POEDA | C12 ×1 C2 ×2 | 94.4 | 87.7 |
| Ex. 4 | Production Ex. 4 | NBKP | Phosphate group | 1.45 | No | 5 or less | 25 μm *1 | ADMBA | C8-18 ×1 C7 ×1 C1 ×2 | 94.8 | 87.0 |
| Ex. 5 | Production Ex. 5 | NBKP | Carboxy group | 1.30 | No | 5 or less | 25 μm *1 | DADMA | C16-18 ×2 C1 ×2 | 91.1 | 81.8 |
| Ex. 6 | Production Ex. 6 | NBKP | Phosphite group | 1.50 | No | 5 or less | 25 μm *1 | DADMA | C16-18 ×2 C1 ×2 | 92.2 | 84.7 |
| Ex. 7 | Production Ex. 7 | NBKP | Phosphate group | 2.00 | No | 5 or less | 25 μm *1 | DADMA | C16-18 ×2 C1 ×2 | 94.4 | 88.8 |
| Ex. 8 | Production Ex. 8 | NUKP | Phosphate group | 1.45 | No | 5 or less | 36 μm *1 | DADMA | C16-18 ×2 C1 ×2 | 96.3 | 91.7 |

(continued)

| | Cellulose fiber-containing material | Cellulose fiber as raw material | | | | | | Counterion | | Yield [mass %] after classification | |
|---|---|---|---|---|---|---|---|---|---|---|---|
| | | Type of pulp | Anionic group | Amount of functional group [mmol/g] | Mechanical treatment | Supernatant yield [mass %] | Fiber width | Counterion of anionic group | Number of carbon atoms | Sieve opening: 150 μm | Sieve opening: 300 μm |
| Ex. 9 | Production Ex. 9 | NBKP | Phosphate group | 1.45 | Refiner × 3 | 9.4 | 60% or more of fibers with width of at least greater than 1000 nm *2 | DADMA | C16-18 ×2<br>C1 ×2 | 82.8 | 45.8 |
| Ex. 10 | Production Ex. 10 | NBKP | Phosphate group | 1.45 | Refiner × 8 | 33.5 | 50% or more of fibers with width of at least greater than 1000 nm *2 | DADMA | C16-18 ×2<br>C1 ×2 | 62.8 | 32.1 |

[Table 2]

| | Cellulose fiber-containing material | Cellulose fiber as raw material | | | | | | Counterion | | Yield [mass %] after classification | |
|---|---|---|---|---|---|---|---|---|---|---|---|
| | | Type of pulp | Anionic group | Amount of functional group [mmol/g] | Mechanical treatment | Supernatant yield [mass %] | Fiber width | Counterion of anionic group | Number of carbon atoms | Sieve opening: 150 μm | Sieve opening: 300 μm |
| Comp. Ex. 1 | Production Ex. 11 | NBKP | Phosphate group | 1.45 | Refiner × 35 | 59.1 | 60% or more of fibers with width of at least 1000 nm or less *2 | DADMA | C16-18 ×2<br>C1 ×2 | 41.1 | 20.5 |
| Comp. Ex. 2 | Production Ex. 12 | NBKP | Phosphate group | 1.45 | High-pressure homogenizer × 1 | 73.0 | 70% or more of fibers with width of at least 1000 or less nm *2 | DADMA | C16-18 ×2<br>C1 ×2 | 11.6 | 3.2 |
| Comp. Ex. 3 | Production Ex. 13 | NBKP | Phosphate group | 1.45 | High-pressure homogenizer × 6 | 99.8 | No fibers found other than fibers with width of 3 -4 nm *3 | DADMA | C16-18 ×2<br>C1 ×2 | 2.1 | 0 |
| Comp. Ex. 4 | Production Ex. 14 | NBKP | Phosphate group | 1.45 | High-pressure homogenizer × 6 | 99.8 | No fibers found other than fibers with width of 3 -4 nm *3 | DDMA | C12 ×2<br>C1 ×1 | 3.3 | 0 |
| Comp. Ex. 5 | Production Ex. 15 | NBKP | Phosphate group | 1.45 | High-pressure homogenizer × 6 | 99.8 | No fibers found other than fibers with width of 3 -4 nm *3 | POEDA | C12 ×1<br>C2 ×2 | 2.2 | 0 |
| Comp. Ex. 6 | Production Ex. 16 | NBKP | Phosphate group | 1.45 | High-pressure homogenizer × 6 | 99.8 | No fibers found other than fibers with width of 3 -4 nm *3 | ADMBA | C8-18 ×1<br>C7 ×1<br>C1 ×2 | 2.2 | 0 |
| Comp. Ex. 7 | Production Ex. 17 | NBKP | Carboxyl group | 1.30 | High-pressure homogenizer × 6 | 84.3 | No fibers found other than fibers with width of 3 -4 nm *3 | DADMA | C16-18 ×2<br>C1 ×2 | 1.6 | 0 |

(continued)

| | Cellulose fiber-containing material | Cellulose fiber as raw material | | | | | | Counterion | | Yield [mass %] after classification | |
|---|---|---|---|---|---|---|---|---|---|---|---|
| | | Type of pulp | Anionic group | Amount of functional group [mmol/g] | Mechanical treatment | Supernatant yield [mass %] | Fiber width | Counterion of anionic group | Number of carbon atoms | Sieve opening: 150 μm | Sieve opening: 300 μm |
| Comp. Ex. 8 | Production Ex. 18 | NBKP | Non | - | No | 5 or less | 25 μm *1 | - | 0 | 95.5 | 88.8 |
| Comp. Ex. 9 | Production Ex. 19 | NBKP | Phosphate group | 1.45 | No | 5 or less | 25 μm *1 | Na | 0 | 91.1 | 82.7 |
| Comp. Ex. 10 | Production Ex. 20 | NBKP | Phosphate group | 1.45 | No | 5 or less | 25 μm *1 | TBA | C4 ×4 | 89.1 | 80.3 |

[Table 3]

| | Evaluation | | | | | |
|---|---|---|---|---|---|---|
| | Fluffed cellulose recovery rate [mass %] | | Bulk [mL/g] | | Precipitation rate [mass %] from water surface (Hydrophobicity increases, as precipitation rate decreases) | |
| Ex. 1 | ○ High | 99.6 | ○ Large | 36.6 | ○ Low | 2.2 |
| Ex. 2 | ○ High | 97.7 | ○ Large | 36.1 | ○ Low | 15.7 |
| Ex. 3 | ○ High | 75.1 | ○ Large | 33.7 | ○ Low | 4.0 |
| Ex. 4 | ○ High | 67.2 | ○ Large | 32.6 | ○ Low | 36.4 |
| Ex. 5 | ○ High | 99.1 | ○ Large | 36.2 | ○ Low | 7.2 |
| Ex. 6 | ○ High | 99.2 | ○ Large | 34.7 | ○ Low | 5.5 |
| Ex. 7 | ○ High | 99.6 | ○ Large | 36.6 | ○ Low | 2.1 |
| Ex. 8 | ○ High | 99.6 | ○ Large | 38.7 | ○ Low | 1.1 |
| Ex. 9 | ○ High | 92.1 | ○ Large | 17.7 | ○ Low | 2.1 |
| Ex. 10 | ○ High | 89.1 | ○ Large | 12.6 | ○ Low | 1.7 |

[Table 4]

| | Evaluation | | | | | |
|---|---|---|---|---|---|---|
| | Fluffed cellulose recovery rate [mass %] | | Bulk [mL/g] | | Precipitation rate [mass %] from water surface (Hydrophobicity increases, as precipitation rate decreases) | |
| Comp. Ex. 1 | ○ High | 94.0 | × Small | 4.1 | × High | 81.1 |
| Comp. Ex. 2 | ○ High | 93.2 | × Small | 2.7 | × High | 87.8 |
| Comp. Ex. 3 | ○ High | 93.0 | × Small | 1.97 | × High | 96.5 |
| Comp. Ex. 4 | ○ High | 92.0 | × Small | 2.11 | × High | 92.8 |
| Comp. Ex. 5 | ○ High | 87.1 | × Small | 2.14 | × High | 96.4 |
| Comp. Ex. 6 | ○ High | 86.5 | × Small | 2.07 | × High | 95.5 |
| Comp. Ex. 7 | ○ High | 93.0 | × Small | 1.77 | × High | 95.1 |

(continued)

| | Evaluation | | | | | |
|---|---|---|---|---|---|---|
| | Fluffed cellulose recovery rate [mass %] | | Bulk [mL/g] | | Precipitation rate [mass %] from water surface (Hydrophobicity increases, as precipitation rate decreases) | |
| Comp.Ex. 8 | ○ High | 60.7 | ○ Large | 32.22 | × High | 99.8 |
| Comp.Ex. 9 | × Low | 11.3 | ○ Large | 25.69 | × High | 99.6 |
| Comp.Ex. 10 | × Low | 22.9 | ○ Large | 29.74 | × High | 98.1 |

Abbreviations and annotations used in the tables are as follows.

DADMA: di-n-alkyldimethyl ammonium
DDMA: didodecylmethyl ammonium
POEDA: polyoxyethylenedodecyl ammonium
ADMBA: alkyldimethylbenzyl ammonium
TBA: tetrabutyl ammonium
Na: sodium
*1 Mean value measured by Kajaani Fiber Lab
*2 Measurement results by observation under optical microscope
*3 Results observed by TEM

Besides, the fiber diameter was measured in the aforementioned Production Examples. This fiber diameter is equivalent to the fiber width of the cellulose fibers constituting the after-mentioned cellulose fiber-containing material obtained by addition of organic onium salts.

The cellulose fiber-containing materials of the Examples had a high fluffed cellulose recovery rate and the fluffed celluloses had a high bulk. In addition, the fluffed celluloses obtained from the cellulose fiber-containing materials of the Examples had a low precipitation percentage from the water surface, and were excellent in terms of hydrophobicity. From these results, it was found that the cellulose fiber-containing materials of the Examples had favorable fluffiness, and that after completion of the fluffing, fluffed celluloses having excellent hydrophobicity were obtained.

< Evaluation 2 >

The fluffed celluloses recovered below the test sieve having an opening of 2 mmcp according to the method described in < Fluffed cellulose recovery rate > (wherein the cellulose fiber-containing materials of Examples 1, 5 and 8, and Comparative Examples 4 and 7 were used) were obtained, and were then subjected to [1] a solvent wetting test and [2] a resin composite test, according to the following methods.

< Solvent wetting test >

Toluene was added to fluffed cellulose fibers, so that the solid-liquid ratio became 6 mL/g (wherein "mL" indicates the volume of toluene, and "g" indicates the absolute dry mass of cellulose fibers), and thereafter, the obtained mixture was gently stirred at normal temperature. The flowability of the liquid layer was observed by visual inspection.

○: A decrease in the flowability of the liquid is observed by visual inspection (i.e., the liquid became a wet mass).
x : A decrease in the flowability of the liquid is not observed by visual inspection (i.e., a large amount of toluene flows freely).

< Resin composite test >

A styrene polymer (polymerization degree: approx. 2000) was dissolved in toluene to a concentration of 10% by mass. A fluffed cellulose was added to the obtained solution in an amount of 5% by mass with respect to the total mass of the styrene polymer, and the thus obtained mixture was then gently stirred at normal temperature. The obtained

styrene polymer-fluffed cellulose dispersed solution was subjected to cast drying, to result in a basis weight of 2000 g/$m^2$, and the compositeness of the cellulose fibers with the styrene resin was observed by visual inspection.

○: Cellulose fibers are distributed in almost the entire area in the thickness direction.
x : Cellulose fibers are localized at the bottom portion in the thickness direction.

[Table 5]

| | Solvent wetting test | Resin composite test |
|---|---|---|
| Ex. 1 | ○ | ○ |
| Ex. 5 | ○ | ○ |
| Ex. 8 | ○ | ○ |
| Comp. Ex. 4 | × | × |
| Comp. Ex. 7 | × | × |

In the Examples, a fluffed cellulose having a high affinity between a solvent and a resin was obtained. In addition, after completion of the resin composite test, a resin composite comprising a fluffed cellulose was formed.

## Claims

**1.** A cellulose fiber-containing material comprising cellulose fibers having anionic groups, wherein

the fiber width of the cellulose fibers is greater than 1000 nm,
wherein the anionic group is at least one selected from a phosphoric acid group or a phosphoric acid group-derived substituent, a carboxy group or a carboxy group-derived substituent, and a sulfone group or a sulfone group-derived substituent,
the amount of the anionic group is from 0.10 mmol/g to 5.2 mmol/g of the cellulose fibers,
the yield of the cellulose fiber-containing material measured by the following measurement method is 50% by mass or more,
the cellulose fiber-containing material has organic onium ions as counterions of the anionic groups,
the organic onium ion is represented by the following formula (A):

[Formula 2]

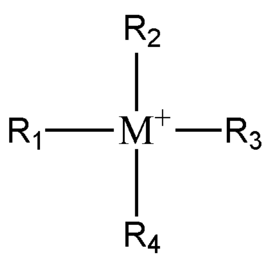

Formula (A)

wherein in the formula (A), M represents a nitrogen atom or a phosphorus atom, and $R_1$ to $R_4$ each independently represent a hydrogen atom or an organic group,
wherein at least one of $R_1$ to $R_4$ represents an organic group containing 5 or more carbon atoms, or that the total number of carbon atoms contained in $R_1$ to $R_4$ is 17 or more;
the content of the organic onium ions is 1.0% by mass or more with respect to the total mass of the cellulose fiber-containing material, and
the organic onium ions satisfy at least one condition selected from the following (a) and (b):

(a) containing a hydrocarbon group having 5 or more carbon atoms; and
(b) having a total carbon number of 17 or more,

wherein the measurement method for the yield is the following:
a cellulose fiber-containing material is immersed in ion exchange water for 24 hours, a solid concentration is adjusted to 20% by mass, and a dispersion treatment is carried out for 15 minutes using a high-speed rotating disperser at a circumferential speed of 10 m/s; and the obtained dispersed solution is subjected to wet classification on a JIS test sieve with an opening of 150 μm, and the yield is calculated according to the following equation:

yield [% by mass] = absolute dry mass of cellulose fiber-containing material remaining on test sieve / absolute dry mass of cellulose fiber-containing material subjected to test x 100.

2. The cellulose fiber-containing material according to claim 1, wherein in the formula (A), M represents a nitrogen atom.

3. The cellulose fiber-containing material according to claim 1 or 2, wherein the organic onium ion is selected from the group consisting of lauryltrimethyl ammonium, cetyltrimethyl ammonium, stearyltrimethyl ammonium, octyldimethylethyl ammonium, lauryldimethylethyl ammonium, didecyldimethyl ammonium, lauryldimethylbenzyl ammonium, tributylbenzyl ammonium, methyltri-n-ocyl ammonium, hexyl ammonium, n-octyl ammonium, dodecyl ammonium, tetradecyl ammonium, hexadecyl ammonium, stearyl ammonium, N,N-dimethyldodecyl ammonium, N,N-dimethyltetradecyl ammonium, N,N-dimethylhexadecyl ammonium, N,N-dimethyl-n-octadecyl ammonium, dihexyl ammonium, di(2-ethylhexyl) ammonium, di-n-octyl ammonium, didecyl ammonium, didodecyl ammonium, didecylmethyl ammonium, N,N-didodecylmethyl ammonium, polyoxyethylene dodecyl ammonium, alkyldimethylbenzyl ammonium, di-n-alkyldimethyl ammonium, behenyltrimethyl ammonium.

4. The cellulose fiber-containing material according to claim 1, wherein the organic onium ion is selected from the group consisting of tetraphenyl phosphonium, tetraoctyl phosphonium, acetonyltriphenyl phosphonium, allyltriphenyl phosphonium, amyltriphenyl phosphonium, benzyltriphenyl phosphonium, ethyltriphenyl phosphonium, diphenylpropyl phosphonium, triphenyl phosphonium, tricyclohexyl phosphonium, and tri-n-octyl phosphonium.

5. A fluffed cellulose formed by fluffing the cellulose fiber-containing material according to any one of claims 1 to 4.

6. A composition comprising the cellulose fiber-containing material according to any one of claims 1 to 4 or the fluffed cellulose according to claim 5, and an organic solvent.

7. A composition comprising the cellulose fiber-containing material according to any one of claims 1 to 4 or the fluffed cellulose according to claim 5, and a resin.

**Patentansprüche**

1. Ein zellulosefaserhaltiges Material, umfassend Zellulosefasern mit anionischen Gruppen, wobei

die Faserbreite der Zellulosefasern größer als 1000 nm ist,
wobei die anionische Gruppe mindestens eine ist ausgewählt aus einer Phosphorsäuregruppe oder einem von Phosphorsäuregruppe abgeleiteten Substituenten, einer Carboxylgruppe oder einem von Carboxylgruppe abgeleiteten Substituenten, und einer Sulfonylgruppe oder einem von Sulfonylgruppe abgeleiteten Substituenten,
die Menge der anionischen Gruppe 0,10 mmol/g bis 5,2 mmol/g bezogen auf die Zellulosefasern beträgt,
die Ausbeute des zellulosefaserhaltigen Materials, gemessen mit der folgenden Messmethode, 50 Massen-% oder mehr beträgt,
das zellulosefaserhaltige Material organische Oniumionen als Gegenionen der anionischen Gruppen aufweist,
das organische Oniumion durch die folgende Formel (A) dargestellt wird:

[Formel 2]

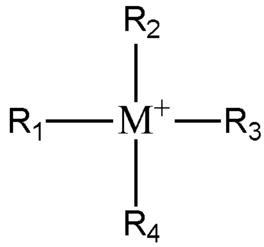

Formel (A)

wobei in der Formel (A) M ein Stickstoffatom oder ein Phosphoratom darstellt und $R_1$ bis $R_4$ jeweils unabhängig voneinander ein Wasserstoffatom oder eine organische Gruppe darstellen,
wobei mindestens einer von $R_1$ bis $R_4$ eine organische Gruppe darstellt, die 5 oder mehr Kohlenstoffatome enthält, oder die Gesamtzahl der in $R_1$ bis $R_4$ enthaltenen Kohlenstoffatome 17 oder mehr beträgt;
der Gehalt an organischen Oniumionen 1,0 Massen-% oder mehr bezogen auf die Gesamtmasse des zellulosefaserhaltigen Materials beträgt, und
die organischen Oniumionen mindestens eine der folgenden Bedingungen (a) und (b) erfüllen:

(a) enthalten eine Kohlenwasserstoffgruppe mit 5 oder mehr Kohlenstoffatomen; und
(b) weisen eine Gesamtkohlenstoffzahl von 17 oder mehr auf,

wobei das Messverfahren für die Ausbeute wie folgt ist:
ein zellulosefaserhaltiges Material wird 24 Stunden lang in Ionenaustauscherwasser getaucht, eine Feststoffkonzentration wird auf 20 Massen-% eingestellt und eine Dispergierbehandlung wird 15 Minuten lang unter Verwendung eines rotierenden Hochgeschwindigkeitsdispergators bei einer Umfangsgeschwindigkeit von 10 m/s durchgeführt; und die erhaltene dispergierte Lösung wird einer Nassklassierung auf einem JIS-Testsieb mit einer Öffnung von 150 $\mu$m unterzogen, und die Ausbeute wird gemäß der folgenden Gleichung berechnet:

Ausbeute [Massen-%] = absolute Trockenmasse des im Testsieb verbleibenden zellulosefaserhaltigen Materials / absolute Trockenmasse des dem Test unterworfenen zellulosefaserhaltigen Materials × 100.

**2.** Das zellulosefaserhaltige Material gemäß Anspruch 1, wobei in der Formel (A) M ein Stickstoffatom darstellt.

**3.** Das zellulosefaserhaltige Material gemäß Anspruch 1 oder 2, wobei das organische Oniumion ausgewählt ist aus der Gruppe bestehend aus Lauryltrimethylammonium, Cetyltrimethylammonium, Stearyltrimethylammonium, Octyldimethylethylammonium, Lauryldimethylethylammonium, Didecyldimethylammonium, Lauryldimethylbenzylammonium, Tributylbenzylammonium, Methyltri-n-ocyl-Ammonium, Hexyl-Ammonium, n-Octyl-Ammonium, Dodecyl-Ammonium, Tetradecyl-Ammonium, Hexadecyl-Ammonium, Stearyl-Ammonium, N,N-Dimethyldodecyl-Ammonium, N,N-Dimethyltetradecyl-Ammonium, N,N-Dimethylhexadecyl-Ammonium, N,N-Dimethyl-n-Octadecyl-Ammonium, Dihexyl-Ammonium, Di(2-ethylhexyl)-Ammonium, Di-n-octyl-Ammonium, Didecyl-Ammonium, Didodecyl-Ammonium, Didecyl-Methyl-Ammonium, N,N-DidodecylMethyl-Ammonium, Polyoxyethylen-Dodecyl-Ammonium, Alkyldimethylbenzyl-Ammonium, Di-n-Alkyl-Dimethyl-Ammonium, Behenyltrimethyl-Ammonium.

**4.** Das zellulosefaserhaltige Material gemäß Anspruch 1, wobei das organische Oniumion ausgewählt ist aus der Gruppe bestehend aus Tetraphenylphosphonium, Tetraoctylphosphonium, Acetonyltriphenylphosphonium, Allyltriphenylphosphonium, Amyltriphenylphosphonium, Benzyltriphenylphosphonium, Ethyltriphenylphosphonium, Diphenylpropylphosphonium, Triphenylphosphonium, Tricyclohexylphosphonium und Tri-n-octylphosphonium.

**5.** Flockenzellulose, die durch Auflockern des zellulosefaserhaltigen Materials gemäß einem der Ansprüche 1 bis 4 gebildet wird.

**6.** Zusammensetzung, umfassend das zellulosefaserhaltige Material gemäß einem der Ansprüche 1 bis 4 oder die

Flockenzellulose gemäß Anspruch 5 und ein organisches Lösungsmittel.

7. Zusammensetzung, umfassend das zellulosefaserhaltige Material gemäß einem der Ansprüche 1 bis 4 oder die Flockenzellulose gemäß Anspruch 5 und ein Harz.

## Revendications

1. Matériau contenant des fibres de cellulose comprenant des fibres de cellulose ayant des groupes anioniques, dans lequel

la largeur de fibres de cellulose est supérieure à 1000 nm,
dans lequel le groupe anionique étant au moins un élément choisi parmi un groupe acide phosphorique ou un substituant dérivé du groupe acide phosphorique, un groupe carboxy ou un substituant dérivé du groupe carboxy, et un groupe sulfone ou un substituant dérivé du groupe sulfone,
la quantité de groupe anionique est comprise entre 0,10 mmol/g et 5,2 mmol/g de fibres de cellulose,
le rendement du matériau contenant des fibres de cellulose, mesuré par le procédé de mesure suivante, est égal ou supérieur à 50 % en masse,
le matériau contenant des fibres de cellulose a des ions onium organiques comme contre-ions des groupes anioniques,
l'ion onium organique est représenté par la formule suivante (A) :

[Formule 2]

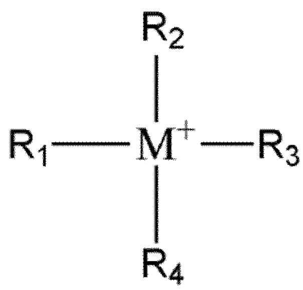

Formule (A)

dans lequel, dans la formule (A), M représente un atome d'azote ou un atome de phosphore, et $R_1$ à $R_4$ représentent chacun indépendamment un atome d'hydrogène ou un groupe organique,
dans lequel au moins un élément parmi $R_1$ à $R_4$ représente un groupe organique contenant 5 atomes de carbone ou plus, ou que le nombre total d'atomes de carbone contenus dans $R_1$ à $R_4$ est égal ou supérieur à 17 ;
la teneur en ions onium organiques est égale ou supérieure à 1,0 % en masse par rapport à la masse totale du matériau contenant des fibres de cellulose, et
les ions onium organiques satisfont à au moins une condition choisie parmi les conditions suivantes (a) et (b) :

(a) contenir un groupe d'hydrocarbures ayant 5 atomes de carbone ou plus ; et
(b) avoir un nombre total de carbone égal ou supérieur à 17,

dans lequel le procédé de mesure du rendement est la suivante :
un matériau contenant des fibres de cellulose est immergé dans de l'eau à échange d'ions pendant 24 heures, une concentration solide est ajustée à 20 % en masse et un traitement de dispersion est effectué pendant 15 minutes à l'aide d'un disperseur rotatif à grande vitesse à une vitesse circonférentielle de 10 m/s ; et la solution dispersée obtenue est soumise à une classification humide sur un tamis d'essai JIS d'une ouverture de 150 μm et le rendement est calculé selon l'équation suivante :

rendement [% en masse] = masse sèche absolue de matériau contenant des fibres de cellulose restant sur le tamis d'essai / masse sèche absolue de matériau contenant des fibres de cellulose soumis à l'essai x 100.

2. Matériau contenant des fibres de cellulose selon la revendication 1, dans lequel, dans la formule (A), M représente un atome d'azote.

3. Matériau contenant des fibres de cellulose selon la revendication 1 ou 2, dans lequel l'ion onium organique est choisi dans le groupe constitué du lauryltriméthyl ammonium, le cétyltriméthyl ammonium, le stéaryltriméthyl ammonium, l'octyldiméthyléthyl ammonium, le lauryldiméthyléthyl ammonium, le didécyldiméthyl ammonium, le lauryldiméthylbenzyl ammonium, le tributylbenzyl ammonium, le méthyltri-n-ocyl ammonium, l'hexylammonium, le n-octyl ammonium, le dodécyl ammonium, le tétradécyl ammonium, l'hexadécyl ammonium, le stéaryl ammonium, le N,N-diméthyldodécyl ammonium, le N,N-diméthyltétradécyl ammonium, le N,N-diméthylhexadécyl ammonium, le N,N-diméthyl-n-octadécyl ammonium, le dihexyl ammonium, le di(2-éthylhexyl) ammonium, le di-n-octyl ammonium, le didecyl ammonium, le didodécyl ammonium, le didecylméthyl ammonium, le N,N-didodécylméthyl ammonium, le polyoxyéthylène dodécyl ammonium, l'alkyldiméthylbenzyl ammonium, le di-n-alkyldiméthyl ammonium, le béhényltriméthyl ammonium.

4. Matériau contenant des fibres de cellulose selon la revendication 1, dans lequel l'ion onium organique est choisi dans le groupe constitué du tétraphényl phosphonium, le tétraoctyl phosphonium, l'acétonyltriphényl phosphonium, l'allyltriphényl phosphonium, l'amyltriphényl phosphonium, le benzyltriphényl phosphonium, l'éthyltriphényl phosphonium, le diphénylpropyl phosphonium, le triphényl phosphonium, le tricyclohexyl phosphonium et le tri-n-octyl phosphonium.

5. Cellulose peluchée formée par le peluchage du matériau contenant des fibres de cellulose selon l'une quelconque des revendications 1 à 4.

6. Composition comprenant le matériau contenant des fibres de cellulose selon l'une quelconque des revendications 1 à 4 ou la cellulose peluchée selon la revendication 5, et un solvant organique.

7. Composition comprenant le matériau contenant des fibres de cellulose selon l'une quelconque des revendications 1 à 4 ou la cellulose peluchée selon la revendication 5, et une résine.

[Figure 1]

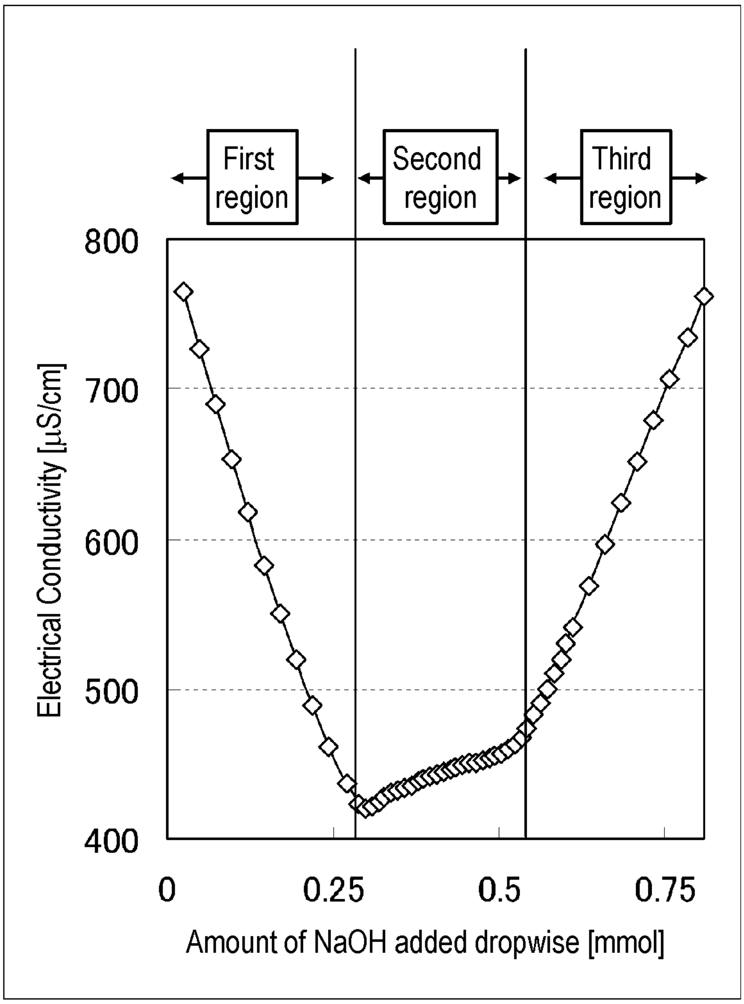
First region
Second region
Third region
Electrical Conductivity [µS/cm]
800
700
600
500
400
0
0.25
0.5
0.75
Amount of NaOH added dropwise [mmol]

[Figure 2]

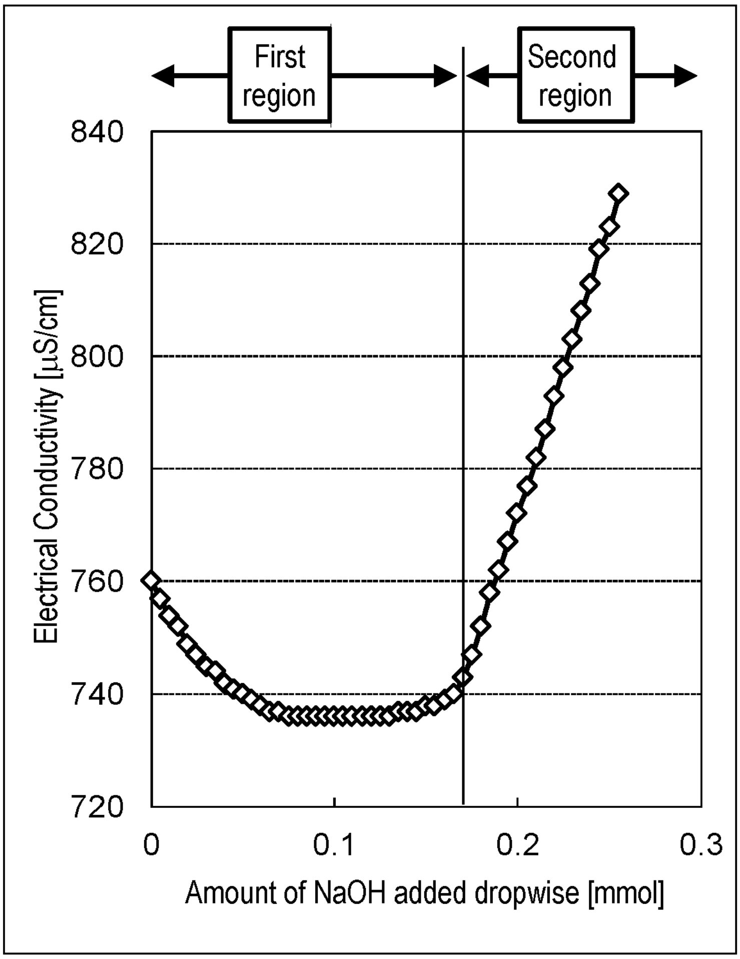
First region
Second region
840
820
800
780
760
740
720
0
0.1
0.2
0.3
Electrical Conductivity [μS/cm]
Amount of NaOH added dropwise [mmol]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017065109 A
- JP 2015213643 A
- JP 2007046219 A


### Non-patent literature cited in the description


- **SEAGAL et al.** *Textile Research Journal,* 1959, vol. 29, 786